# EUROPÄISCHE PATENTSCHRIFT

(11) **EP 1 981 819 B1**
(45) Veröffentlichungstag und Bekanntmachung des Hinweises auf die Patenterteilung: **24.07.2019**
(21) Anmeldenummer: 06840952.3
(22) Anmeldetag: 04.12.2006
(51) Int. Cl.: C03B 5/02, C03B 5/16, C03B 5/167, C03B 5/225, C03B 5/43

(54) **VORRICHTUNG UND VERFAHREN ZUM KONTINUIERLICHEN LÄUTERN VON GLÄSERN MIT HOHEN REINHEITSANFORDERUNGEN**
APPARATUS AND PROCESS FOR THE CONTINUOUS REFINING OF GLASSES HAVING HIGH PURITY SPECIFICATIONS
PROCEDE ET DISPOSITIF DESTINES A LA PURIFICATION EN CONTINU DE VERRES AYANT DES EXIGENCES ELEVEES DE PURETE

(30) Priorität: 24.01.2006 DE 102006003521
(43) Veröffentlichungstag der Anmeldung: 22.10.2008
(73) Patentinhaber: Schott AG, 55122 Mainz (DE)
(72) Erfinder: LEISTER, Michael, 55218 Ingelheim (DE); OHMSTEDE, Volker, 55411 Bingen (DE); WEIDMANN, Günter, 55237 Flonheim (DE)
(74) Vertreter: Herden, Andreas F.
(86) Internationale Anmeldenummer: PCT/EP2006/011611
(87) Internationale Veröffentlichungsnummer: WO 2007/087856

(56) Entgegenhaltungen:
- EP-A- 1 524 243
- WO-A-02/42230
- WO-A-02/44115
- WO-A-2006/115997
- DE-A1- 10 146 884
- DE-A1- 19 939 773
- JP-A- 2 022 132
- US-A1- 5 785 726
- US-A1- 2002 174 688
- US-A1- 2006 242 996

## Beschreibung

### Beschreibung der Erfindung

Die vorliegende Erfindung betrifft eine Vorrichtung und ein Verfahren zum kontinuierlichen Läutern hochreiner, niedrigviskoser Glasschmelzen in einem Aggregat.

### Hintergrund der Erfindung

Für die Güte von Gläsern für optische Anwendungen, insbesondere optischer, faseroptischer, Displaygläser und/oder technischer Gläser mit hohen Anforderungen, ist die Abwesenheit von Gaseinschlüssen beziehungsweise von Gasbläschen und ein Minimum an verfärbenden Einschlüssen entscheidend für die störungsfreie Transmission elektromagnetischer Strahlung. Ferner wird die Güte eines Glases im Wesentlichen durch dessen Homogenität und die Abwesenheit von Schlieren beeinflusst. Toxische oder zumindest gesundheits- bzw. ökologisch bedenkliche Substanzen, wie beispielsweise Arsen oder Antimon sollten soweit als möglich vermindert werden.

Im ersten Prozessschritt der Glasherstellung wird die Ausgangssubstanz, das sogenannte Gemenge eingeschmolzen. Nachdem das Gemenge aufgrund zunehmender Temperatur zähflüssig geworden ist, beginnt langsam die Homogenisierung, das heißt die Auflösung und gleichmäßige Verteilung aller Bestandteile der Schmelze sowie die Beseitigung von Schlieren. Ebenso setzt langsam eine erste Läuterung, das heißt eine Entfernung von Gasblasen aus der Glasschmelze ein, welche in weiteren speziellen Läuterschritten fortgeführt wird.

Das Einschmelzen und Läutern in ein und demselben Aggregat ist zwar das kostengünstigste Läuterverfahren findet aber nur bei technischen Gläsern mit relativ geringen Ansprüchen an den Blasenanteil Verwendung, da der Restblasengehalt in diesem Verfahren relativ hoch ist.

Im Gegensatz zu dem vorstehend beschriebenen Verfahren werden Gläser mit höheren Anforderungen, wie zum Beispiel optische, faseroptische oder technische Gläser, bei kontinuierlich betriebenen Schmelzverfahren, üblicherweise in speziellen Läuterkammern beziehungsweise Läuteraggregaten aus Platin oder Platinlegierungen, geläutert um diese blasenfrei zu erhalten. Das als Auskleidungs- oder Massivmaterial verwendete Platin ist zum einen sehr kostenintensiv, zum anderen haben Aggregate aus Platin oder Platinlegierungen den Nachteil, dass sie aufgrund der Korrosivität und z.T. Reaktivität der Glasschmelzen geringe Mengen an Pt oder anderen Legierungsbestandteilen in die Schmelze abgeben. Diese Legierungsbestandteile liegen dann je nach Redoxzustand des Glases in ionischer Form, zum Beispiel als Pt⁴⁺-Ion oder Rh⁴⁺-Ionen oder als Kolloidalteilchen fein verteilt in elementarer Form im Glasendprodukt vor. Dieser Eintrag an ionischem oder elementarem Metall in die Glasschmelze kann je nach Konzentration und/oder Teilchengröße im Glasendprodukt zu einer unerwünschten Verfärbung und zu einer verminderten Transmission der elektromagnetischen Strahlung, nicht nur im sichtbaren Bereich, führen. Eine weitere Möglichkeit, die Läuterung des Glases zu verbessern und die Läuterzeit zu verringern, liegt in der Verwendung höherer Läutertemperaturen. Durch eine Erhöhung der Temperatur während des Läuterns wird unter anderem die Viskosität der Glasschmelze herabgesetzt und hierdurch die Aufstiegsgeschwindigkeit der in der Glasschmelze vorhandenen Blasen erhöht.

Bei erhöhten Läutertemperaturen, insbesondere oberhalb von 1550°C oder beim Läutern korrosiver Gläser ergibt sich durch einen verstärkten Glasangriff auf die Aggregatwand ein erhöhter Materialeintrag in die Glasschmelze und somit auch in das Glasendprodukt. Zudem ergibt sich auch eine nachteilige Beschränkung hinsichtlich hoher Läutertemperaturen, da Aggregate aus Platin nur bis zu einer Temperatur von maximal 1600°C und Aggregate aus PtRh10, einer Legierung, die zu 90 Gew.-% aus Platin und 10 Gew.-% aus Rhodium besteht, bis maximal 1700°C eingesetzt werden können. Der hohe Materialeintrag führt zu einer starken Gelbfärbung des Glases. Aggregate aus PtRh20, einer Legierung, die zu 80 Gew.-% aus Platin und 20 Gew.-% aus Rhodium besteht, können bis maximal 1800°C eingesetzt werden, was ebenfalls zu einer starken Gelbfärbung des Glases führt. Auch können Aggregate aus ZrO₂-stabilisiertem Platin nur bis 1650°C eingesetzt werden.

Ein weiterer Ansatzpunkt zur Optimierung der Läuterung liegt in der Verwendung chemischer Läutermittel. Das Prinzip dieses Verfahrens besteht darin, dem Gemenge Bestandteile zuzusetzen, welche in der Schmelze bei höheren Temperaturen unter Gasabgabe bzw. -freisetzung, im allgemeinen von Sauerstoff, zerfallen. Die von den Läutermitteln freigesetzten Gase nehmen die in der Schmelze befindlichen Gase auf, hierdurch entstehen sich mit zunehmender Läuterzeit vergrößernde Blasen, welche schneller an die Oberfläche der Schmelze aufsteigen und somit die Schmelze schneller verlassen.

Unter anderem ist dabei die Wahl der Läutermittel abhängig von der Temperatur der Glasschmelze während der Läuterung, da die Gasabgabe beziehungsweise der Zerfall der unterschiedlichen Läutermittel bei unterschiedlichen Temperaturen stattfindet. Beispielsweise zerfällt das Läutermittel Arsenpentoxid, As₂O₅, bereits bei einer Temperatur oberhalb 1250°C unter Abspaltung von Sauerstoff in Arsenik, As₂O₃, welches in der Glasschmelze verbleibt und sich somit im Glasendprodukt befindet. Dahingegen ist ein sogenanntes Hochtemperaturläutermittel wie beispielsweise Sn0₂ erst bei einer Temperatur oberhalb 1500°C zu verwenden. Das SnO₂ zerfällt ab Temperaturen von 1500°C in SnO und ½ O₂. Die entstandenen Oxide verbleiben größtenteils in der Schmelze und sind im Glasendprodukt nachweisbar. Im Glasendprodukt vorhandenes Arsen ist besonders dann von Nachteil, wenn ökologisch und gesundheitlich unbedenkliche Gläser gewünscht sind. Es besteht daher ein dringender Bedarf an Möglichkeiten zur Läuterung bei hohen Temperaturen, um die Läuterung effizienter durchführen zu können, um ein möglichst blasenarmes Produkt zu erhalten.

In dem Dokument US 6632086 B1 wird ein Glasschmelztiegel beschrieben, welcher es ermöglicht, das Läutern des Glases bei Temperaturen von bis zu 2350°C durchzuführen. Der Betrieb der Vorrichtung bei solch hohen Temperaturen führt aufgrund einer besseren Löslichkeit von Gasen in dem Ausgangsmaterial zu geringeren Blasendefekten, geringeren Verfärbungen und einer minimalen Schlierenbildung. Die Vorrichtung umfasst einen Körper aus keramischem, feuerfesten Material, welcher zur Glas zugewandten Seite hin mit einer 0,25 mm bis 1,27 mm dicken, nicht reaktiven Grenzschicht aus Rhenium, Osmium, Iridium oder einer Mischung aus diesen beschichtet ist.

In der Glasschmelze vorhandene Blasen haben, wie vorstehend beschrieben, ihren Ursprung nicht nur in den Ausgangsprodukten, vielmehr können diese auch durch eine thermische Dissoziation von in der Schmelze befindlichem Wasser herrühren.

Mit diesem Phänomen der Blasenbildung befassen sich die nachfolgend beschriebenen Druckschriften.

In der Druckschrift WO 02/44115 A2 wird ein beschichtetes Metallteil für die Glasherstellung beschrieben, welches an der der Glasschmelze abgewandten Seite eine H₂ oder H₂ und O₂ undurchlässige Schicht aufweist. In Abhängigkeit von der Temperatur dissoziiert das in der Glasschmelze vorhandene Wasser zu Wasserstoff und Sauerstoff. Während der Wasserstoff durch das Wandmaterial hindurchdiffundieren kann, ist dies für den gebildeten Sauerstoff aufgrund seiner Größe nicht möglich. Die Wasserstoffdiffusion bewirkt, dass in der Schmelze kein Gleichgewichtszustand zwischen Wasserstoff und Sauerstoff mehr erreicht werden kann, damit sich beim Abkühlen der Schmelze wieder Wasser bildet. Überschreitet die O₂-Konzentration in der Schmelze schließlich die Löslichkeitsgrenze bei einem O₂-Partialdruck von etwa 1 bar, so bilden sich O₂-haltige Blasen aus. Die Blasen wachsen durch das Eindiffundieren von SO₂, N₂, CO₂ und anderen im Glas physikalisch gelösten Gasen während des Abkühlens noch weiter an und sind in dem fertigen Produkt nachweisbar. Hierdurch wird die Qualität der erzeugten Glasprodukte erheblich beeinträchtigt. WO02/42230 und EP1524243 beschreiben Schmelzofen, die Iridium enthalten. Dokument WO2006/115997 beschreibt ein Verfahren zum Läutern.

Aus dem Patent US 5785726 ist bekannt, dass Behälter aus Platin oder Platinlegierungen durch Spülung mit wasserstoff- oder wasserdampfhaltiger Atmosphäre vor der Entstehung von elektrochemisch gebildeten O₂-Blasen geschützt werden können.

Die WO 98/18731 beschreibt die Blasenbildung in der Kontaktzone zwischen Glasschmelze und Platin oder Molybdän dadurch zu vermindern, indem eine Wasserstoffatmosphäre auf der der Glasschmelze abgewandten Seite angelegt wird. Der H₂-Partialdruck von außen verhindert die Diffusion von H₂ aus der Schmelze durch die Platinwandung hindurch.

Die zuletzt genannten Verfahren benötigen jedoch eine aufwendige Überwachung und Steuerung. Sie zeigen einerseits eine große Fehleranfälligkeit und bergen andererseits aufgrund der Gefährlichkeit des Wasserstoffs ein hohes Risiko in sich. Bei Störungen der Steuerung und Regelung entstehen kostspielige Produktionsausfälle.

### Aufgabe der Erfindung

Vor diesem Hintergrund liegt der vorliegenden Erfindung die Aufgabe zugrunde, eine Vorrichtung und ein Verfahren zum Läutern von Glasschmelzen, insbesondere von Schmelzen von Gläsern für optische Anwendungen, insbesondere für optische Gläser, bereitzustellen, welche die oben erwähnten Nachteile des Standes des Technik weitestgehend vermeiden und es ermöglichen, die in der Schmelze vorhandenen Blasen möglichst vollständig auszutreiben und eine Neubildung von Sauerstoffblasen möglichst zu verhindern.

Insbesondere soll das Verfahren und die Vorrichtung für das Läutern niedrigviskoser Gläser mit optischen Anwendungen, vorzugsweise optischer Gläser, geeignet sein.

Dies umfasst das Ziel, ein Läutern der Schmelze bei Temperaturen, die höher sind als 1200°C zu ermöglichen und den Einsatz von Läutermitteln in der Glasschmelze zumindest zu reduzieren und insbesondere die Menge an Läutermitteln zumindest zu verringern. Hierbei soll der Einsatz toxischer oder zumindest gesundheitsgefährdender bzw. ökologisch bedenklicher Läutermittel und Substanzen, wie beispielsweise die Oxide von Arsen oder Antimon zumindest minimiert werden.

Außerdem ist es eine Aufgabe der Erfindung, einen Angriff der Schmelze, insbesondere korrosiver Gläser, auf die Schmelzkontaktfläche der Wand des Läuteraggregats und einen hieraus resultierenden, erhöhten Material- und Ioneneintrag in die Glasschmelze zu vermindern.

Sofern ein Eintrag der Schmelzkontaktfläche des Aggregats in die Schmelze nicht vermieden werden kann, sollte das Material der Schmelzkontaktfläche derart gewählt und beschaffen sein, dass der Materialeintrag in die Glasschmelze die optischen Eigenschaften des Glasendprodukts, beispielsweise eines optischen Glaselementes in Ausbildung einer Linse, nicht wesentlich verändert werden. So ist beispielsweise eine Beeinträchtigung der Transmission im UV- und/oder IR-Bereich einer für den optisch sichtbaren Bereich des elektromagnetischen Spektrums ausgebildeten Linse tolerabel.

Darüber hinaus sollen das Verfahren und die Vorrichtung zu dessen Ausführung in dem Läuteraggregat die sich ausbildenden Konvektionswalzen stabilisieren und Turbulenzen dämpfen. Die minimale und die mittlere Verweilzeit der Schmelze sollen erhöht und ein enges Verweilzeitspektrum erzielt werden. Zudem sind Kurzschlussströmungen zu minimieren.

In diesem Zusammenhang soll es möglich sein, das Strömungsverhalten derart zu beeinflussen, zu steuern und/oder zu regeln, so dass ein optimales Läuterergebnis erzielt werden kann.

Ferner sollen das Verfahren und die Vorrichtung zur dessen Ausführung wirtschaftlich sinnvoll und kostengünstig zu nutzen sein. Dies umfasst dabei das Ziel, die Verwendung von teuren Ausgangsmaterialien, insbesondere von reinem Platin oder Platinlegierungen, zu vermeiden.

### Lösung der Aufgabe

Gelöst werden diese Aufgaben auf überraschend einfache Weise durch ein Verfahren gemäß Anspruch 1 und einer Vorrichtung zur Herstellung von optischen Glaselementen gemäß des Anspruchs 3 Vorteilhafte Ausführungsformen sind Gegenstand der jeweiligen Unteransprüche. Erfindungsgemäß wird ein Verfahren zum Homogenisieren und/oder zum kontinuierlichen Läutern einer vorzugsweise niedrigviskosen Glasschmelze, in einem Aggregat, welches einen Raum zur Aufnahme der Schmelze und einer mit der Schmelze in Kontakt stehenden Atmosphäre definiert, mit zumindest einem Zulauf und zumindest einem Ablauf bereitgestellt, wobei zumindest ein Abschnitt, welcher zumindest abschnittsweise eine Schmelzkontaktfläche aufweist, des Aggregats und gegebenenfalls des Zulaufs und/oder des Ablaufs Iridium umfasst und zumindest der Iridium umfassende Abschnitt des Aggregats und/oder des Zulaufs und/oder des Ablaufs zumindest bereichsweise beheizt wird. Beim dem Vorgang des Läuterns wird die Temperatur der Schmelze soweit erhöht, dass in der Schmelze Blasen, insbesondere aus den in der Schmelze gelösten Gasen und Läutermitteln, gebildet und/oder bereits in der Schmelze vorhandene Blasen vergrößert werden. Die Blasen steigen in der Schmelze auf und treten über die Schmelzoberfläche in die Atmosphäre ein, welche in dem Raum vorliegt, der durch das Aggregat oberhalb der Schmelzoberfläche definiert oder gebildet ist.

Die Zusammensetzung der Atmosphäre oder der Gasphase ergibt sich nicht einfach aus dem thermodynamischen Gleichgewicht der flüssigen Schmelze und des gesättigten Dampfes in der Atmosphäre. Die Blasen enthalten beispielsweise Sauerstoff und/oder auch sauerstoffhaltige Gase, wie beispielsweise CO₂, N₂, SO₂. Zudem wird in einer vorteilhaften Ausführungsform die Zusammensetzung der Atmosphäre oberhalb der Schmelzoberfläche vielmehr definiert eingestellt. Dazu sei auf einen späteren Teil der Beschreibung verwiesen. Durch den Iridium umfassenden Abschnitt wird zudem die Bildung von Sauerstoffblasen an der Schmelzkontaktfläche eines Aggregats, eines Zulaufs und/oder eines Ablaufs des Aggregates, aus der Wasserdissoziation zumindest reduziert oder vollständig vermieden. Der Iridium umfassende Abschnitt der Schmelzkontaktfläche verhindert die Bildung von initialen Sauerstoffblasen in dem Bereich der Glasschmelze, welcher in Kontakt mit der Schmelzkontaktfläche steht. Aus der Glasschmelze austretende Blasen und ebenso in der Glasschmelze gebildete Blasen müssen dabei nicht immer nur Sauerstoff als Gasbestandteil enthalten. Der in den Blasen enthaltene Sauerstoff kann beispielsweise auch gegen andere Bestandteile der Schmelze ausgetauscht sein, so daß auch weitere Gase in den Blasen, wie beispielsweise CO₂, N₂, SO₂, enthalten sein können. Der genannte Abschnitt und/oder die Schmelzkontaktfläche des Abschnittes dient als eine Sauerstoffblasenverhinderungsschicht oder Blasenverhinderungsschicht. Unter einer Schmelzkontaktfläche wird eine Grenzfläche verstanden, die zumindest abschnittsweise über ihre Oberfläche mit der Schmelze in Kontakt steht oder in Berührung kommt.

Der von den Erfindern gefundene Wirkmechanismus der erfindungsgemäßen Sauerstoffblasenverhinderungsschicht ist in der detaillierten Beschreibung der Ausführungsformen eingehend beschrieben.

Das erfindungsgemäße Verfahren ermöglicht es, hohe Temperaturen in der Schmelze zu realisieren. Hierdurch wird das in der Schmelze enthaltene Läutermittel durch einen temperaturbedingten erhöhten Umsetzungsgrad wesentlich besser ausgenutzt. Diese hohen Temperaturen führen zudem zu einer Gleichgewichtsverschiebung der Redoxverhältnisse hin zur reduzierten Spezies. Ebenfalls ermöglicht dies den Zugang zu Läutermitteln, wie beispielsweise SnO₂, welches sich erst ab einer Temperatur von 1500°C zersetzt. Im gleichen Zug kann der Einsatz von üblicherweise bei niedrigen Temperaturen verwendeten, insbesondere toxischen Läutermittel wie As₂O₅ zumindest verringert werden.

Das Aggregat oder der Iridium umfassende Abschnitt ist beheizbar und das Aggregat und/oder der Iridium umfassende Abschnitt wird dabei konduktiv und/oder induktiv beheizt. Die Schmelze wird dabei im wesentlichen nicht direkt beheizt sondern wird im wesentlichen oder zumindest abschnittsweise über den Iridium umfassenden Abschnitt. Die Anwendung zusätzlicher Heizungen, vorzugsweise zur direkten Beheizung der Schmelze, beispielsweise durch in der Schmelze angeordnete Elektroden, oder mittels Strahlungsheizung, beispielsweise mittels eines Brenners oder eines elektrisch beheizten Wärmestrahlers, ist ebenfalls möglich.

Das Verfahren zum kontinuierlichen Läutern wird in Läutervorrichtungen durchgeführt, wobei der Iridium umfassende Abschnitt der Läutervorrichtung oder des Läuteraggregats und/oder deren Zulauf und/oder Ablauf mit einem Anteil an Iridium von etwa 50 Gew.-% bis etwa 100 Gew.-%, bevorzugt von etwa 90 Gew.-% bis etwa 100 Gew.-%, besonders bevorzugt von größer als etwa 99 Gew.-% bis etwa 100 Gew.-%, bereitgestellt wird.

Ein weiterer Vorteil bei der Verwendung von Aggregaten, Zuläufen und/oder Abläufen aus Iridium oder Iridiumlegierungen liegt darin, dass durch die höheren Temperaturen, welche in dem erfindungsgemäßen Verfahren eingestellt werden können, die Viskosität der Schmelze abgesenkt wird. Dies hat zur Folge, dass die während des Läuterns aus den Ausgangsstoffen freigesetzten Gase als Blasen wesentlich schneller aufsteigen. Dies bewirkt eine Erhöhung der Glasqualität aufgrund erheblich geringerer Blaseneinschlüsse. Darüber hinaus kann die eingesetzte Menge an Läutermittel aufgrund einer erhöhten Effizienz stark reduziert werden, was zu einer deutlichen Kostenreduktion führt.

Die Viskosität der Glasschmelze ist abhängig von der Temperatur der Schmelze und deren Zusammensetzung. Der Betrieb des erfindungsgemäßen Verfahrens und/oder der erfindungsgemäßen Vorrichtung erfolgt in einem Temperaturbereich in der Schmelze von etwa 800°C bis 2000°C, bevorzugt von 1000°C bis 1800°C. In einer bevorzugten Ausführungsform erfolgt der Betrieb bei einer Temperatur von 1250°C bis 1600°C. Die niedrigviskosen Glasschmelzen, weisen bei diesen Temperaturen eine ungefähre Viskosität η von kleiner als etwa 1 dPa·s, bevorzugt von kleiner als etwa 0,1 dPa·s, besonders bevorzugt von kleiner als etwa 0,01 dPa·s auf.

Bei dem Verfahren zum Läutern oder kontinuierlichen Läutern einer Schmelze, insbesondere einer niedrigviskosen Glasschmelze hat es sich als vorteilhaft erwiesen, wenn das Aggregat, insbesondere der Iridium umfassende Abschnitt des Aggregats, mit zumindest einem Abschnitt bereitgestellt wird, welcher eine Temperaturbeständigkeit von größer als etwa 1700°C, bevorzugt von größer als etwa 2000°C, besonders bevorzugt von größer als etwa 2200°C aufweist. Im Vergleich zu den bisher erreichbaren Temperaturen können wesentlich höhere Temperaturen eingestellt werden, wodurch die Viskosität der Schmelze abgesenkt wird und die Gasblasen schneller aufsteigen.

Beispielsweise weist die Glasschmelze eines Lanthan-Borat-Glases bereits bei einer Läutertemperatur von etwa 1400°C eine Viskosität η von etwa 0,2 dPa·s und eine hohe Aufstiegsgeschwindigkeiten der Blasen mit einem Durchmesser von etwa 0,3 mm in der Schmelze von etwa 3,8 mm/s auf. Diese läßt sich jedoch noch auf einen Wert von etwa 17,7 mm/s steigern, wenn die Temperatur in der Schmelze auf etwa 1600°C erhöht und die Viskosität gleichzeitig auf etwa 0,01 dPa·s gesenkt wird. Dadurch wird zum einen ein verbessertes Läuterergebnis bei erhöhter Läutertemperatur und bei gleicher Läutermittelmenge oder ein gleich gutes Läuterergebnis bei erhöhter Läutertemperatur aber reduzierter Läutermittelmenge erzielt.

Liegt Iridium als Legierung vor, so wird in einer weiteren vorteilhaften Ausführungsform der Iridium umfassende Abschnitt zusätzlich zumindest Platin, Rhodium, Palladium und/oder Zirkonium oder wenigstens zwei dieser Elemente umfassend bereitgestellt.

Gemäß der Erfindung wird der Iridium umfassende Abschnitt oder Bereich des Aggregates mit einer Dicke von etwa 0,1 mm bis etwa 10 mm, bevorzugt von etwa 0,2 mm bis etwa 5 mm, besonders bevorzugt von etwa 0,3 mm bis etwa 1 mm bereitgestellt.

Im Rahmen des Verfahrens werden die Bereiche oder Auskleidungsbereiche des Aggregats, zumindest der Bereich des Iridium umfassenden Abschnitts, welcher keine Schmelzkontaktfläche aufweist, mit zumindest einer Verkapselung bereitgestellt. Hierdurch werden diese Bereiche des Aggregats, des Zulaufes und/oder des Ablaufes vor ungewünschter Oxidation beispielsweise durch Luftsauerstoff geschützt, was einerseits eine deutlich erhöhte Standzeit der Läutervorrichtung bewirkt und andererseits den sonst möglichen Eintrag von Iridium in die Schmelze über die Gasphase verhindert oder zumindest stark reduziert.

Die Verkapselung kann in Form zumindest eines Mantels, insbesondere aus Metall und/oder Kieselglas bereitgestellt werden und wird vorzugsweise auf der schmelzabgewandten Seite des Iridium umfassenden Abschnitts angeordnet. Diese schützt die Oberfläche, die nicht in Kontakt mit der Schmelze steht, vor einem Angriff durch Luftsauerstoff und damit vor Oxidation. Auch kann die Verkapselung durch einen nicht leitfähigen, gasdichten Hochtemperaturwerkstoff ausgeführt sein. Dabei ist in einer Ausführungsform der Mantel direkt auf der schmelzabgewandten Seite des Iridium umfassenden Abschnitts angeordnet.

In einer weiteren Ausführungsform kann der Mantel einen Raum definieren, welcher zumindest abschnittsweise von der schmelzabgewandten Seite des Iridium umfassenden Abschnitts begrenzt wird. Dabei kann insbesondere zusätzlich die Verkapselung ebenfalls in Form einer definierten Atmosphäre vorzugsweise in Form einer Schutzgasatmosphäre bereitgestellt werden.

In einer vorteilhaften Ausführungsform entspricht die definierte Atmosphäre, vorzugsweise im wesentlichen, der Atmosphäre, welche in dem durch das Aggregat definierten Raum angelegt ist und/oder wird in einem Raum, welcher zumindest abschnittsweise von der schmelzabgewandten Seite des Iridium umfassenden Abschnitts und dem Mantel begrenzt wird, bereitgestellt.

In einer weiteren Ausführungsform wird die definierte Atmosphäre als ein Unterdruck, insbesondere gegenüber Atmosphärendruck, bereitgestellt. Vorzugsweise weist der Unterdruck einen Wert von kleiner als etwa 1 bar, vorzugsweise von kleiner als etwa 0,1-0,05 bar auf. Dadurch wird das Entgasen der Schmelze in dem Aggregat gefördert. Auch die Verkapselung durch ein Fluid, vorzugsweise als ein Gas, insbesondere durch einen fluiden Vorhang haben sich in Versuchen als vorteilhaft herausgestellt. Als besonders vorteilhafte Komponenten einer inerten Schutzgasatmosphäre haben sich Edelgase, vorzugsweise Argon und /oder Helium, Formiergas 95/5, Formiergas 95/10, Kohlendioxid, Kohlenmonoxid, Stickstoff oder ein Gas, welches wenigstens zwei der genannten Gase umfasst, erwiesen. In einer Weitergestaltung der Erfindung ist es ebenfalls von Vorteil, das Aggregat mit einer porösen Schüttung oder einem porösen Körper zu umgeben und durch diese ein Schutzgas hindurch zu leiten. Die Schüttung/der Körper verleiht dem Aggregat zusätzliche mechanische Festigkeit und schützt die Schutzgasatmosphäre vor äußeren Einflüssen, wie beispielsweise vor Luftströmungen.

Überraschenderweise erweist sich der scheinbare Nachteil des Iridiums, vor Oxidation geschützt werden zu müssen, für das Läutern von Schmelzen als sehr vorteilhaft. Schmelzen werden üblicherweise geläutert, indem das in ihnen enthaltene Läutermittel, zum Beispiel As₂0₅, Sb₂0₅, SnO₂, CeO₂ bei den in den Läuterkammern herrschenden hohen Temperaturen in einer Redoxreaktion Sauerstoff abgibt, was durch eine Verringerung des Sauerstoffpartialdrucks in der umgebenden Atmosphäre stark unterstützt wird. Dabei kann das Gas der definierten Atmosphäre mit einem gegenüber Luft zumindest verminderten Sauerstoffpartialdruck bereitgestellt werden.

Erfindungsgemäß wird das Verfahren zum Läutern und/oder kontinuierlichen Läutern oder Einschmelzen einer anorganischen Schmelze, insbesondere einer Glasschmelze in einem Aggregat durchgeführt, welches sich dadurch kennzeichnet, dass das Aggregat, der Zulauf und/oder der Ablauf mehrteilig modular ausgebildet oder einteilig ausgebildet bereitgestellt wird bzw. werden. Durch die einteilige Ausführung werden Undichtigkeiten an den Stoßstellen der einzelnen Bestandteile weitgehend vermieden. Zudem kann das Aggregat einteilig oder mehrteilig, der Zulauf einteilig oder mehrteilig und/oder der Ablauf einteilig oder mehrteilig ausgebildet sein.

In vorteilhafter Weise wird das Verfahren in einem Aggregat durchgeführt, welches aus einem Aggregat, einem Zulauf und einem Ablauf gebildet wird, dessen einzelne Teile beziehungsweise Abschnitte untereinander mittels einer Flanschverbindung miteinander verbunden sein können und sind somit im Falle einer Beschädigung oder eines Verschleißes einzeln austauschbar. Diese Flanschverbindung kann mit einer keramischen und/oder glasigen Dichtung bereitgestellt und/oder zumindest abschnittsweise gekühlt werden, was eine längere Haltbarkeit der Dichtung bewirkt. Dabei kann die Steckverbindung insbesondere zusätzlich zumindest abschnittsweise derart gekühlt werden, dass sie vorzugsweise mittels erstarrter Glasschmelze abgedichtet wird.

In einer Ausführungsform wird das Aggregat vollständig durch den Iridium umfassenden Abschnitt gebildet. In einer weiteren Ausführungsform wird bzw. werden zumindest Teilbereiche des Bodens und/oder zumindest Teilbereiche des Deckels und/oder zumindest Teilbereiche der Seitenwand durch den Iridium umfassenden Abschnitt gebildet. Als Alternative oder als Zusatz wird bzw. werden der Boden und/oder der Deckel und/oder die Seitenwand durch den Iridium umfassenden Abschnitt gebildet.

Der Iridium umfassende Abschnitt des Aggregates kann beispielsweise als ein Boden des Aggregates bereitgestellt werden, der im Wesentlichen nicht planar ist. Der Boden ist dadurch gekennzeichnet, dass er eine Erhebung gegenüber dem Boden aufweisend bereitgestellt wird. Diese Erhebung kann mit einem Querschnitt bereitgestellt werden, welcher im Wesentlichen der Form eines Dreiecks oder eines Halbkreises entspricht und als strömungsbeeinflussender Einbau wirkt. Weiterhin ist es von Vorteil, in der anorganischen Schmelze zumindest einen strömungsbeeinflussenden Einbau anzuordnen, um hierdurch in dem erfindungsgemäßen Verfahren eine bessere Durchmischung beziehungsweise Homogenisierung der Schmelze zu erreichen, Kurzschlussströmungen zu verhindern und Turbulenzen zu dämpfen. Dies ermöglicht, das Strömungsverhalten der anorganischen Schmelze, der Glasschmelze zu beeinflussen, insbesondere zu regeln und/oder zu steuern.

In einer vorteilhaften Ausführungsform des Verfahrens werden die Bereiche des Aggregats, des Zulaufs und/oder Ablaufs, welche nicht in Kontakt mit der Schmelze stehen, als ein feuerfestes Material, vorzugsweise eine Keramik oder ein Metall bereitgestellt. Gemäß einer besonderen Ausführungsform kann das Material in Form von Feuerfeststeinen, Feuerfestkeramiken, gekühltem nicht-feuerfestem Material und/oder als Metall wie beispielsweise Molybdän bereitgestellt werden. Hierdurch wird die benötigte Menge an Iridium oder an Iridium umfassenden Metallen deutlich verringert, was in vorteilhafter Weise zu einer erheblichen Kostenreduktion führt.

In einer weiteren vorteilhaften Ausführungsform des Verfahrens werden Bereiche des Aggregates wie der Zulaufs und/oder der Ablauf, welche zwar in Kontakt mit der Schmelze stehen, aber aufgrund der tieferen Temperaturen nicht so stark angegriffen werden als ein feuerfestes Material, vorzugsweise eine Keramik oder Kieselglas bereitgestellt. Gemäß einer besonderen Ausführungsform kann das Material in Form von Feuerfeststeinen, Feuerfestkeramiken, gekühltem nicht-feuerfestem Material und/oder gekühltem oder nichtgekühltem Kieselglas bereitgestellt werden. Hierdurch wird die benötigte Menge an Iridium oder an Iridium umfassenden Metallen deutlich verringert, was in vorteilhafter Weise zu einer erheblichen Kostenreduktion führt.

In einer vorteilhaften Ausführungsform des Verfahrens werden das Aggregat, insbesondere der Boden und/oder der Deckel und/oder die Seitenwand, der Zulauf und/oder der Ablauf zumindest abschnittsweise erwärmt und/oder gekühlt, wodurch an den unterschiedlichen Bereichen des Aggregats definierte Temperaturen eingestellt werden können, wodurch das Strömungsverhalten der Schmelze durch ein erzeugtes Temperaturprofil gezielt beeinflusst, vorzugsweise gesteuert und oder geregelt wird. Zudem kann das Aggregat, insbesondere der Deckel und/oder die Seitenwand, und/oder die Abschnitte der Seitenwand im Bereich der Dreiphasengrenze und/oder die Abschnitte der Seitenwand im Bereich oberhalb des Schmelzkontaktes, und oder die Stirnwändezumindest abschnittsweise derartig gekühlt werden, dass eine Skullkruste aus arteigenem Material auf der Schmelzkontaktfläche ausgebildet wird.

Weiterhin umfasst die Erfindung eine Vorrichtung zum Ausführen eines Verfahrens zum kontinuierlichem Läutern einer vorzugsweise niedrigviskosen Glasschmelze in einem Aggregat, welches einen Raum zur Aufnahme der Schmelze und eine mit der Schmelze in Kontakt stehenden Atmosphäre definiert, mit zumindest einem Zulauf und zumindest einem Ablauf, wobei zumindest ein Abschnitt, welcher zumindest abschnittsweise eine Schmelzkontaktfläche aufweist, des Aggregates und gegebenenfalls des Zulaufs und/oder des Ablaufs Iridium umfasst.

Die Vorrichtung ist dadurch gekennzeichnet, dass der Iridium umfassende Abschnitt einen Anteil an Iridium von etwa 50 Gew.-% bis etwa 100 Gew.-%, bevorzugt von etwa 90 Gew.-% bis etwa 100 Gew.-%, besonders bevorzugt von größer als etwa 99 Gew.-% bis etwa 100 Gew.-% aufweist.

Neben dem bereits aufgeführten Vorteil, der verminderten Sauerstoffblasenbildung an Iridium umfassenden Abschnitten, weisen Iridium oder iridiumhaltige Legierungen in vorteilhafter Weise eine wesentlich höhere chemische Beständigkeit gegenüber Glasschmelzen auf als das Edelmetall Platin oder Platinlegierungen. Weiterhin ist die thermische Belastbarkeit wesentlich höher als die von Platin oder Platinlegierungen. Die Iridium umfassenden Bauteile können im Kontakt mit Glasschmelzen bis zu einer Temperatur von ca. 2200°C erhitzt werden. In vorteilhafter Weise ist selbst bei diesen hohen Temperaturen der Angriff der Glasschmelzen auf das Metall äußerst gering. Im Glas gelöstes Iridium hat zudem in geringen Mengen keinen wesentlichen Einfluss im sichtbaren Wellenlängenbereich elektromagnetischer Strahlung. Liegt das Iridium als Legierung vor, so weist der Iridium umfassende Abschnitt zumindest Platin, Rhodium, Palladium und/oder Zirkonium oder wenigstens zwei dieser Elemente als weitere Bestandteile auf.

In einer besonders vorteilhaften Ausführungsform ist das Aggregat vollständig durch den Iridium umfassenden Abschnitt gebildet. In einer weiteren vorteilhaften Ausführungsform ist bzw. sind zumindest Teilbereiche des Bodens und/oder zumindest Teilbereiche des Deckels und/oder zumindest Teilbereiche der Seitenwand durch den Iridium umfassenden Abschnitt gebildet. Als Alternative oder als Zusatz ist bzw. sind der Boden, der Deckel und/oder die Seitenwand durch den Iridium umfassenden Abschnitt gebildet.

Die Beheizung der Schmelze in dem Aggregat erfolgt durch konduktive Heizung und/oder induktive Heizung. Erfindungsgemäß hat sich die konduktive oder induktive Beheizung des Aggregats oder der Iridium umfassenden Abschnitts als besonders vorteilhaft erwiesen. Induktorgeometrie und Schwingkreisfrequenz sind dabei an die entsprechende Geometrie des Aggregats angepasst. Typische Frequenzen liegen im Mittelfrequenzbereich 8-50 kHz. Eine Beheizung der Iridiumabschnitte mit Hochfrequenz in einer Größenordnung von etwa 100 kHz bis etwa 2 MHz ist ebenfalls möglich und kann sich bei bestimmten Geometrien und Bauformen als notwendig erweisen.

Ist das Aggregat so ausgebildet, dass in kühlmittelgekühlten Abschnitten eine Skullkruste aus arteigenem Material auf der Schmelzkontaktfläche ausgebildet wird, so umfassen diese Abschnitte in einer erfindungsgemäßen Ausführungsform als Material, insbesondere als Material der Schmelzkontaktfläche, zumindest ein Metall und/oder eine Metallegierung oder besteht sogar aus einem Metall und/oder einer Metallegierung. Mögliche Materialien umfassen dabei beispielsweise Edelmetalle (insbesondere Iridium), Edelstahl, Aluminium und/oder eine Aluminiumlegierung. Die genannten Materialien sind beispielhaft zu verstehen und beschränken sich keinesfalls auf die genannte Auswahl.

Entsprechend ist die Seitenwand zumindest abschnittsweise gekühlt oder kühlbar, beispielsweise mittels eines durch einen in der Wand angeordneten Hohlraum fließenden Fluids, ausgebildet. Die Temperatur der gekühlten Seitenwand weist dabei einen Wert von kleiner als etwa 500°C, bevorzugt von kleiner als 250°C, besonders bevorzugt von kleiner als etwa 120°C auf. Durch die Kühlung der Glaskontaktflächen friert die Schmelze an der Oberfläche der gekühlten Bauteile des Aggregates ein und es bildet sich eine Grenzschicht aus arteigenem Material, welche einen Angriff der Schmelze auf das Material weitestgehend verhindert.

In einer weiteren Ausführungsform weist das Aggregat eine Abdeckung oder Decke auf, welche zumindest abschnittsweise gekühlt, beispielsweise mittels eines Fluids, insbesondere Luft, oder ungekühlt ist. Mögliche Materialien der Abdeckung umfassen eine Keramik, insbesondere eine Feuerfestkeramik.

Dabei kann in einem zwischen der Schmelzoberfläche, den Seitenwänden des Aggregats und der Abdeckung gebildeten Raum eine definierte Atmosphäre angelegt sein kann. Um den Läutervorgang der Schmelze zu unterstützen, kann beispielsweise ein Unterdruck in dem gebildeten Raum angelegt sein. Um beispielsweise die Oxidation von Iridium- oder Iridiumlegierung-basierten Bauteilen weitgehend zu vermeiden, kann auch in dem Raum eine Atmosphäre aus einem Schutzgas, insbesondere Stickstoff, Argon, Helium oder Formiergas (95/5 oder 90/10) eingeleitet sein. Darüber hinaus kann auch die Sauerstoffabgabe durch die in der Schmelze vorhandenen Läutermittel mittels einer Verringerung des Sauerstoffpartialdrucks in der Atmosphäre des Raumes gefördert werden. Zudem kann die definierte Atmosphäre an sich oder zusätzlich reduzierend sein, um beispielsweise in der Schmelze vorhandenes Eisen der Wertigkeitsstufe +3 nach +2 zu reduzieren. Eisen der Wertigkeitsstufe +2 hat dabei keinen wesentlichen Einfluss auf die Eigenschaften im sichtbaren optischen Bereich.

Die hohen Läutertemperaturen und der geringe Sauerstoffpartialdruck in der Glasschmelze führen nicht nur bei den Läutermitteln zu einer Verschiebung der Redoxgleichgewichte sondern auch bei sämtlichen anderen in der Schmelze enthaltenen polyvalenten Ionen. Diese polyvalenten Ionen, üblicherweise hauptsächlich Eisen- und Chromionen, sind typische Verunreinigungen in Glasrohstoffen, beziehungsweise werden während des Herstellprozesses in die Schmelze eingetragen. Die höheren Oxidationsstufen Fe³⁺ und Cr⁶⁺ führen zu einer deutlichen und intensiven Verfärbung der Gläser im sichtbaren Bereich als die niedrigeren Oxidationsstufen der Ionen Fe²⁺ und Cr³⁺. Insbesondere führt Fe³⁺ zu Verfärbungen im sichtbaren Bereich, das Cr⁶⁺ ist darüber hinaus hoch toxisch.

In einer bevorzugten Ausführungsform in der die Seitenwände vollständig oder zumindest oberhalb der Glaslinie gekühlt sind und sich eine Skullkruste aus arteigenem Material bildet und die Abdeckung aus einer gekühlten oder ungekühlten Keramik, oder einem gekühlten Metall besteht, können im Atmosphärenraum über der Schmelze auch oxidierende Bedingungen, insbesondere eine Luftatmosphäre oder eine sauerstoffhaltige Atmosphäre eingestellt werden, da es in diesem Bereich keinen direkten Iridiumkontakt gibt.

Eine oxidierende Atmosphäre ist insbesondere für Materialien und Gläser wichtig, die selbst zur Reduktion neigen, beispielsweise phosphathaltige, germanathaltige, stannathaltige, bismuthhaltige und bleihaltige Schmelzen. Hier gilt es insbesondere ein genaues Fenster zwischen Läuterung und Reduktion einzuhalten.

Für weitere Merkmale der erfindungsgemäßen Vorrichtung sei auf die Beschreibung des erfindungsgemäßen Verfahrens hingewiesen.

Die Vorrichtung und das Verfahren gemäß der vorliegenden Erfindung sind insbesondere geeignet zum Läutern und/oder Homogenisieren von Gläsern für optische Anwendungen, insbesondere optischer Gläser wie z.B. Borat- und Lanthanboratgläser, Phosphatgläser, Schwermetall-Phosphatgläser, Fluorid-Phosphatgläser, Fluoridgläser, Aluminatgläser, aber auch Borosilkatgläser, Zinksilikatgläser, Aluminosilikatgläsern, Alumoborosilikatgläser, bismuth-, und germaniumhaltigen Gläsern oder Gläsern mit niedrigem Gehalt an polyvalenten Ionen, insbesondere mit einem Ionenanteil unter 0,01 Gew.-%. Anwendungen finden die genannten Gläser beispielsweise in einem in optischen Abbildungs- und Belichtungssystemen, optischen Systemen zur Datenübertragung, optischen Systemen zur Datenspeicherung, optischen Filtersystemen, Systemen zur Lichtübertragung und/oder Displayanwendungen, in optischen Glaselementen. Die hier genannten Gläser und Anwendungen sind beispielhaft zu verstehen und beschränken sich keinesfalls auf die genannte Auswahl.

Weiterhin umfasst die Erfindung ein Produkt, insbesondere ein Glas, vorzugsweise ein optisches Glas, welches mit dem erfindungsgemäßen Verfahren oder mittels der erfindungsgemäßen Vorrichtung herstellbar oder insbesondere hergestellt ist.

Hinsichtlich der Gläser, welche mit Hilfe der Erfindung geläutert oder homogenisiert werden können, ergeben sich besondere Vorteile dadurch, dass diese sich durch einen besonders geringen Blasenanteil kennzeichnen.

Das Glas weist einen Einschluss von Blasen mit einem Blasendurchmesser von kleiner als etwa 25 µm, bevorzugt von kleiner als etwa 10 µm und besonders bevorzugt von kleiner als etwa 5 µm auf. Ein Anteil an Blasen der genannten Größenordnung und/oder Blasen der genannten Abmessungen haben einen nahezu vernachlässigbaren Einfluss auf die optischen Eigenschaften eines mit dem erfindungsgemäßen Vorrichtung hergestellten optischen Elements.

Der Blaseneinschluss wird mittels einer visuellen Untersuchung festgestellt. Dabei wird das Glas mit einer Unterseite auf einem schwarzen Untergrund plaziert und von der Seite beleuchtet. Von Oberseite des Glases in Richtung des schwarzen Untergrundes wird das Glas betrachtet. Die Blasen werden als helle Punkte sichtbar. Die Größe der Blasen wird mittels einer Skala unter einem Mikroskop gemessen.

Der Blasendurchmesser im Sinne der vorliegenden Erfindung kann beispielsweise als Durchmesser einer als kugelförmig angenommenen Blase bestimmt werden. Auch kann die längste Erstreckung der Blase zur Bestimmung des Blasendurchmessers herangezogen werden.

Neben einem geringeren Anteil an Blasen zeichnen sich die mit dem erfindungsgemäßen Verfahren oder mittels der erfindungsgemäßen Vorrichtung hergestellten Produkte und/oder Gläser in vorteilhafter Weise durch einen zumindest verminderten Anteil an toxischen-, gesundheits-, ökologisch bedenklicher Substanzen, wie beispielsweise Arsenverbindungen, aus. Das Glas ist daher besonders gesundheitsverträglich und kann beispielsweise als Bioglas verwendet werden.

Das Glas hat einen Anteil an Arsen von weniger als 0,3 Gew.-%, bevorzugt von weniger als 0,03 Gew.-%, besonders bevorzugt von weniger als 0,005 Gew.-%, einen Anteil an Antimon von weniger als 0,5 Gew.-%, bevorzugt von weniger als 0,1 Gew.-%, besonders bevorzugt von weniger als 0,025 Gew.-% und/oder einen Anteil an Blei von weniger als 0,1 Gew.-%, bevorzugt von weniger als 0,01 Gew.-%, besonders bevorzugt von weniger als 0,005 Gew.-% auf. Es kann hierdurch als gesundheitlich unbedenklich eingestuft werden.

Aufgrund des verminderten Kontaktes von platinhaltigem Wandmaterial mit der Schmelze, ist das Glas dadurch gekennzeichnet, dass es einen Anteil an Platin von weniger als etwa 50 ppm, bevorzugt von weniger als etwa 20 ppm, besonders bevorzugt von weniger als etwa 10 ppm aufweist. Bedingt durch den Kontakt der iridiumhaltigen Schicht mit der Schmelze während des Verfahrens kennzeichnet sich das Glas durch einen Anteil an Iridium von etwa 1 ppm bis etwa 500 ppm, bevorzugt von etwa 1 ppm bis etwa 100 ppm, besonders bevorzugt von etwa 2 ppm bis etwa 20 ppm. Hierdurch entstehen Produkte welche aufgrund des geringen Anteils an Platin nur geringfügig veränderte Spektraleigenschaften im sichtbaren Bereich aufweisen. In vorteilhafter Weise hat der Anteil an Iridium kaum Einfuss auf die Spektraleigenschaften der Produkte beziehungsweise Gläser.

Ferner ist das Glas dadurch gekennzeichnet, dass es gegenüber einem im Wesentlichen gleichen Glas, welches in einer im Wesentlichen aus Platin bestehenden Vorrichtung geläutert ist, bei einem Reintransmissionsgrad τᵢ in einem Bereich von etwa 50 % eine Verschiebung von etwa 5 nm bis etwa 50 nm, bevorzugt von etwa 5 nm bis etwa 20 nm, besonders bevorzugt etwa 8 nm bis etwa 15 nm zu kleinen Wellenlängen hin aufweist. Dies resultiert in einer verbesserten Transmission im unteren sichtbaren Bereich des elektromagnetischen Spektrums. Unter einem im Wesentlichen gleichen Glas ist ein Glas zu verstehen, welches im Wesentlichen durch die gleichen Ausgangsstoffe hergestellt ist. Unter einer im Wesentlichen aus Platin bestehenden Vorrichtung bezeichnet eine Vorrichtung, welche einen Anteil an Platin von mehr als etwa 80 Gew.% aufweist.

Von den Erfindern durchgeführte Versuche zeigen einen nachweisbaren Eintrag von Platin in Gläser, welche bei einer Temperatur von 1480° über 1 Stunde in einem aus einer PtIr1-Legierung gefertigtem Tiegel inkubiert worden waren von 9 ppm, während in den Gläsern kein Iridium nachweisbar war. In einer Schmelze, welche bei unter den gleichen Bedingungen in einem Iridium-Tiegel inkubiert worden war, waren 4 ppm Iridium neben 0,3 ppm Platin nachweisbar. Aus diesen Vergleichsexperimenten geht eindeutig hervor, dass bei der Verwendung von Iridium als Schmelzkontaktmaterial ein wesentlich geringerer Materialabtrag aus der Tiegelwand stattfindet und somit weniger metallische Bestandteile beziehungsweise Ionen in dem Produkt, beziehungsweise Glas nachweisbar sind.

Im Wesentlichen haben die vorstehend genannten Substanzen ihren Ursprung in der Verwendung entsprechender Läutermittel oder als Bestandteil der Wand, welche mit der Schmelze in Kontakt treten kann beziehungsweise tritt und lassen sich aufgrund eines Materialeintrages beziehungsweise Eintrages in dem Produkt beziehungsweise Glas nachweisen.

Hierdurch kann die Qualität des Glases nochmals gesteigert werden, da kein Eintrag des ebenfalls färbenden Platins beziehungsweise von Platinionen ins Glas erfolgt. Durch die Verwendung eines solchen Läuterverfahrens auf Iridiumbasis lassen sich vorteilhafte Transmissionen und Blasenqualitäten bei gleichzeitiger Minimierung des Läutermitteleinsatzes realisieren.

Die vorliegende Erfindung wird nachfolgend anhand von Ausführungsbeispielen im einzelnen beschrieben, wobei die Merkmale der unterschiedlichen Ausführungsbeispiele miteinander kombinierbar sind. Hierzu wird auf die beigefügten Zeichnungen Bezug genommen. Dazu beziehen sich in den einzelnen Zeichnungen die gleichen Bezugszeichen auf die gleichen Teile.
- Figur 1: zeigt beispielhaft eine schematische Darstellung einer konduktiv beheizten, vollgekapselten Ir-Läuterkammer mit oder ohne Strömungseinbauten.
- Figur 2: zeigt beispielhaft eine schematische Darstellung einer induktiv beheizten, vollgekapselten Ir-Läuterkammer mit oder ohne Strömungseinbauten.
- Figur 3: zeigt beispielhaft eine schematische Darstellung einer über den Ir-Boden konduktiv beheizten Hybrid-Läuterkammer mit gekühlten Stirnflächen und gekühlten Seitenwänden.
- Figur 4: zeigt beispielhaft eine schematische Darstellung einer über einen geknickten Ir-Boden konduktiv beheizten Hybrid-Läuterkammer mit oder ohne Strömungseinbauten.
- Figur 5: zeigt beispielhaft eine schematische Darstellung einer über den Ir-Boden konduktiv beheizten Hybrid-Läuterkammer mit Zu- und Abläufen aus Feuerfestmaterial
- Figur 6: zeigt beispielhaft eine schematische Darstellung des Anschlusses von Zu- und Ablauf an eine gekühlte Hybrid-Läuterkammer
- Figur 7: zeigt schematisch die diffusionshemmende Wirkung einer Iridium enthaltenden Wand.
- Figur 8: zeigt schematisch die Diffusion von Wasserstoff durch eine Platinwandung.
- Figur 9: zeigt eine schematische Detailansicht des Ausschnitts A1 aus Figur 1 mit einer beispielhaften Ausführungsform eines einschichtigen Systems.
- Figur 10: zeigt eine schematische Detailansicht des Ausschnitts A1 aus Figur 1 mit einer beispielhaften Ausführungsform eines zweischichtigen Systems.
- Figur 11: zeigt den Reintransmissionsgrad τᵢ eines Lanthan-Borat-Glases im unteren sichtbaren Bereich des optischen Spektrums als Funktion der Wellenlänge.

### Detaillierte Beschreibung der Figuren

In weiteren Vergleichsmessungen zwischen Iridium und Platinteilen konnten die Erfinder erstmalig zeigen, dass die Sperrwirkung gegenüber der Wasserstoffdiffusion des Iridiums zu einer Verhinderung der Blasenbildung an der Grenzfläche zwischen Schmelze und Glas zur Folge hat. Dieser Effekt ließ sich bei der Verwendung von Platinrohren und Scheiben nicht feststellen. Hier waren an der Grenzfläche zwischen Metall und Schmelze Blasen zu beobachten, woraus eindeutig hervorgeht, dass Platin im Gegensatz zu Iridium zumindest wasserstoff-durchlässiger ist.

Ein weiterer Effekt des Iridiums, der aufgrund der erhaltenen Versuchsergebnisse diskutiert werden kann, ist die Möglichkeit, bei hohen Temperaturen das Iridium (IV)-Oxid IrO₂ auszubilden, was ebenfalls zu einer verminderten Sauerstoffblasenbildung an der Grenzfläche zwischen der Iridium umfassenden Blasenverhinderungsschicht führt. Der in der Schmelze durch thermische Zersetzung des Wassers entstandene Sauerstoff wird in Form des IrO₂ an der Iridium umfassenden Grenzschicht gebunden, was in vorteilhafter Weise ebenfalls zu einer Verhinderung der Ausbildung von Blasen an der Grenzfläche zwischen Glas und Schmelze führen kann.

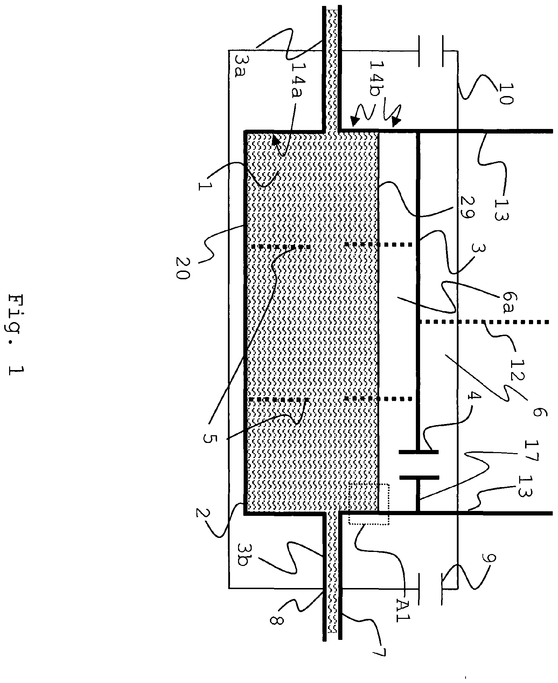

Die in den Figuren 1 bis 5 dargestellten Läuteraggregate 3 können in Ihrer Ausführung beliebige, vorzugsweise runde, ovale oder eckige, insbesondere polygone Querschnitte aufweisen. Länge und Querschnitt richten sich nach der Glasviskosität und dem zu läuternden Durchsatz. Übliche Abmessungen sind bei Schmelzmengen von etwa 0,5-2 t/d Volumina von etwa 5-15 l bei Durchmessern von etwa 60-200 mm und Längen von etwa 1000-1500 mm.

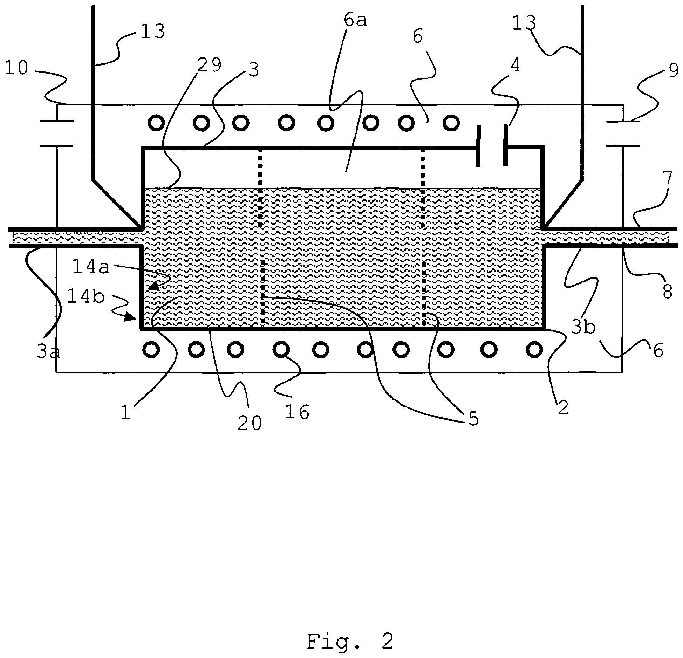

Die in den Figuren 1 und 2 dargestellten Läuterkammern 3 weisen dabei einen vergleichbaren Aufbau auf. Sofern nicht ausdrücklich auf unterschiedliche Merkmale hingewiesen wird, beziehen sich die nachfolgenden Ausführungen sowohl auf die Figur 1 als auch auf Figur 2. Sie zeigen jeweils eine schematische Darstellung einer vollständig gekapselten Läuterkammer 3 oder einer Läuterkammer 3 mit Zulauf 3a und Ablauf 3b, welche als Material zumindest Iridium aufweisen. Als besonders vorteilhaft haben sich dabei die iridiumhaltigen Materialien erwiesen, welche in den Offenlegungsschriften WO 2004/007782 A1, JP 08116152, US 3970450 A1, US 4253872 A1, US 5080862 A1, EP 732416 B1, DE 3301831 A1, US 6071470 A1, US 3918965 A1 und US 6511632 B1 aufgeführt sind.

Die in den Figuren 1 und 2 gezeigten Läuterkammern oder die Aggregate 2 zum Läutern sind vollständig aus dem Iridium umfassenden Abschnitt 20 aufgebaut. D.h. der Iridium umfassende Abschnitt 20 bildet die Seitenwand 18, den Boden 19 und die Decke 17 des Aggregats 2. Der Iridium umfassende Abschnitt 20 oder das Aggregat 2 weist dabei eine Schmelzkontaktfläche 14a und eine schmelzabgewandte Seite 14b auf. Das Aggregat 2 definiert einen Raum zur Aufnahme der Schmelze 1 und einer mit der Schmelze 1 in Kontakt stehenden Atmosphäre 6a.

Figur 1 zeigt dabei eine über die Flansche 13, welche hier als Iridium umfassender Abschnitt 20 oder als eine iridiumhaltige Wand der Läuterkammer 3 ausgebildet sind, und über einen optionalen Flansch 12 konduktiv beheizte Läuterkammer 3, während die in Figur 2 dargestellte Läuterkammer 3 mittels der um die Läuterkammer 3 angeordneten Spulen 16 induktiv beheizt ist.

Die Schmelze bzw. die Glasschmelze 1 tritt von der Seite über den Zulauf 3a in die Läuterkammer 3 ein und über den Ablauf 3b aus dieser heraus. Die Läuterkammer 3 oder deren Zulauf 3a oder Ablauf 3b sind über die Bauteile 7 aus Platin und/oder Platinlegierungen mit den jeweils zuführenden, beispielsweise einem Schmelztiegel, oder abführenden Vorrichtungen, beispielsweise einer Homogenisierungs- oder Transportvorrichtung, verbunden. Innerhalb der Läuterkammer 3 sind Strömungseinbauten oder strömungsbeeinflussende Einbauten 5, sogenannte Shets, in der Schmelze 1 oder in dem Fluß der Schmelze 1 angeordnet. Die Verwendung der Shets ist jedoch optional.

Die Läuterkammer 3 oder die Läuterkammer 3 mit Zulauf 3a und Ablauf 3b kann durch Schweißen so gefertigt sein, dass sie ein komplett verschweißtes Teil umfasst. Sie kann aber auch so aufgebaut sein, dass Teile der Läuterkammer 3 oder der Läuterkammer 3 mit Zulauf 3a oder Ablauf 3b ineinander gesteckt sind und die Steckverbindungen über keramische oder glasige Dichtungen gegen Glasaustritt abgedichtet sind, oder dass diese so gekühlt sind, dass eine Schmelze einfriert und eine Abdichtung bewirkt.

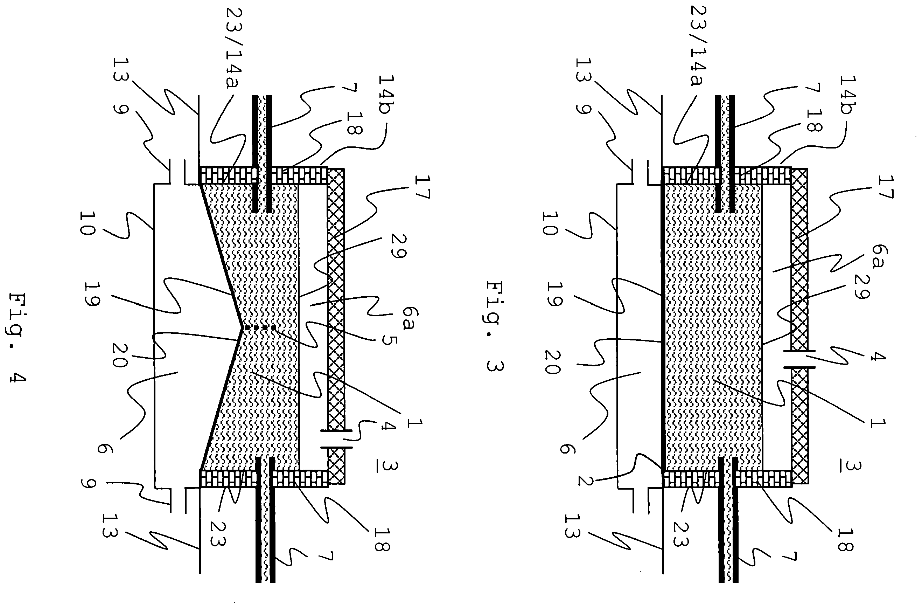

Um eine Oxidation der Läuterkammer 3 oder der irdiumhaltigen Bauteile der Läuterkammer 3 durch den in der Luft vorhandenen Sauerstoff zu verhindern, ist die Läuterkammer 3 innerhalb einer Kapselung 10, welche hier beispielsweise als eine Kammer ausgebildet ist, angeordnet. Die Kapselung 10 weist dabei eine Gaszufuhr 9 auf oder wie dargestellt eine Gasabfuhr und -zufuhr 9 auf. Die Läuterkammer 3 weist oberhalb der Schmelzoberfläche 29 ein Entlüftungsröhrchen 4 auf und stellt darüber eine räumliche Verbindung mit dem durch die Kapselung 10 erzeugten Raum, in welchem eine definierte Atmosphäre 6 vorliegt, her. Ein bevorzugtes Material zum Bilden der Kapselung 10 ist beispielsweise ein nichtmagnetischer, temperaturfester veredelter Stahl, in den die zur Heizung verwendete elektromagnetische Strahlung nur wenig einkoppelt. Durch das Anlegen einer definierten Atmosphäre 6 innerhalb der Kapselung 10, welche ein Formiergas, beispielsweise 90% Stickstoff und 10% Wasserstoff oder ein inertes Gas, beispielsweise Argon, umfasst, kann zum einen die Oxidation der irdiumhaltigen Bauteile der Läuterkammer 3, des Zulauf 3a und des Ablaufs 3b verhindert werden und zum anderen die Sauerstoffabgabe der Schmelze 1 durch die Verringerung des Sauerstoffpartialdrucks in der Schmelze unterstützt werden. Die Figuren 3, 4 und 5 zeigen beispielhaft jeweils eine schematische Darstellung einer als Hybrid ausgebildeten Läuterkammer 3. Die dargestellten Läuterkammern 3 weisen dabei einen zu den in den Figuren 1 und 2 dargestellten Läuterkammern 3 vergleichbaren Aufbau auf. Sofern nicht ausdrücklich auf unterschiedliche Merkmale hingewiesen wird, beziehen sich die nachfolgenden Ausführungen sowohl auf die Figuren 3,4 und 5. Die Beheizung der Läuterkammer 3 oder der Hybrid-Läuterkammer 3 erfolgt direkt über den Flansch 13, welche den iridiumhaltigen Boden 19 der Läuterkammer kontaktiert. Das Einschließen des irdiumhaltigen Bodens 19 erfolgt, wie bereits entsprechend beschrieben, mittels der Verkapselung 10 und einer definierten nicht-oxidierenden, vorzugsweise einer inerten, Atmosphäre 6. Die Hybrid-Läuterkammer 3 weist oberhalb der Schmelzoberfläche 29 ein Entlüftungsröhrchen 4 auf. Somit kann in dem Raum Schmelzoberfläche 29 und der Decke 17 eine definierte Atmosphäre 6 angelegt werden oder die normale Luftatmosphäre wirken.

Die Läuterkammer 3 oder die Hybrid-Läuterkammer 3 ist so ausgeführt, dass zumindest Teile der Seitenwand 18 oder Wandung und/oder der Decke 17 oder die Wandung 18 und/oder die Decke 17 oder Abdeckplatte aus nicht beheizten Feuerfestmaterialien bestehen oder aktiv gekühlt werden bzw. sind. Materialien für die Decke 17 sind temperaturfeste, schmelzatmosphärenresistente und sich gutartig auflösende Feuerfestkeramiken, wie beispielsweise Quarzal, d.h. eine siliziumreiche Keramik, oder Mullit. Für die Wandung bzw. Seitenwand 18 oder für eine gekühlte Wandung oder Seitenwand 18 stellt dagegen eine temperaturfeste, schmelzresistente und sich gutartig auflösende Feuerfestkeramiken, wie z.B. Quarzal oder ein Zirkonsilikat ein geeignetes Material dar. Die Feuerfestkeramik zeichnet sich vorteilhafterweise dadurch aus, dass sie die optischen Eigenschaften des Glases nicht beeinflusst und keine Kristallisationskeime darstellt. Durch die Kühlung der Seitenwand 18 bildet sich auf der zur Schmelze 1 gewandten Seite oder auf den Oberflächen der Seitenwand 18, welche in Kontakt mit der Schmelze 1 stehen, eine Schutzschicht aus arteigenem Material, d.h. aus eingefrorener beziehungsweise erstarrter Glasschmelze 23, welche einen direkten Angriff der Schmelze 1 auf das Wandmaterial verhindert.

Überraschend hat sich dabei herausgestellt, dass durch aktiv fluidgekühlte, beispielsweise wassergekühlte, durchgehenden Wandungen oder Seitenwände 18 das Strömungsprofil der Schmelze 1 in der Läuterkammer 3 dahingehend verändert wird, dass sich auch bei niedrigviskosen Gläsern die sich ausbildenden Konvektionswalzen stabilisieren. Die mittlere Verweilzeit der Schmelze 1 in der Läuterkammer 3 wird erhöht und gleichzeitig sogenannte Kurzschlussströmungen der Schmelze 1 durch die Läuterkammer 3 hindurch verhindert. Unter Kurzschlussströmungen der Schmelze 1 werden dabei Strömungen bzw. Bereiche der Schmelze 1 verstanden, welche eine kurze Aufenthaltsdauer in der Läuterkammer 3 haben und somit nur eine unzureichende Läuterung dieser Bereiche erreicht werden kann.

Der Einbau von unter Umständen konstruktiv aufwendigen strömungsbeeinflussenden Einbauten 5, als optionale Einbauten 5 in den Figuren 1 und 2 dargestellt, zur Strömungsbeeinflussung wird damit überflüssig. Zum anderen befindet sich durch die aktiv mediengekühlten, insbesondere durchgehenden Seitenwände 18 die besonders beanspruchte 3-Phasengrenze Schmelze-Läuterkammer-Atmosphäre im gekühlten Bereich. Dort ist die Schmelze 1 eingefroren, d.h. die 3-Phasengrenze lautet Schmelze-Glas-Atmosphäre und es findet kein Angriff auf das Läuterkammermaterial statt. Dritter Vorteil dieser Bauart ist die Möglichkeit, im Bereich oberhalb der Schmelzoberfläche 29 und innerhalb der Läuterkammer 3 auf die definierte, inerte oder reduzierende, Atmosphäre 6 verzichten zu können, aber nicht zu müssen. Lediglich der iridiumhaltige Bodenbereich 19 der Läuterkammer, muß von außen gegen Oxidation geschützt werden. Diese Bauart ist für alle Gläser von Vorteil, die oxidierende Bedingungen benötigen, wie z.B. blei- , silber- oder bismuthaltige Gläser. Diese oxidierenden Bedingungen können in der Atmosphäre 6a oberhalb der Schmelzoberfläche 29 erzeugt werden.

In einer Variante dieser Hybrid- oder Mischform der Läuterkammer 3, aus iridiumhaltigen Boden 19 und wassergekühlten Wandungen oder Seitenwänden 18, sind zur Unterstützung der Läuterung und Homogenisierung, der Verhinderung von Kurzschlussströmungen und der Verbesserung der Stabilität der Konvektionszellen strömungsbeeinflussende Einbauten 5 in der Schmelze 1 angeordnet und/oder der Boden 19 mit einer Erhebung aufweisend bereitgestellt. Der in Figur 4 dargestellte Boden 19 ist beispielsweise geknickt bzw. weist eine dreieckigen Querschnitt auf. Dadurch können gewünschte Strömungen gezielt unterstützt werden.

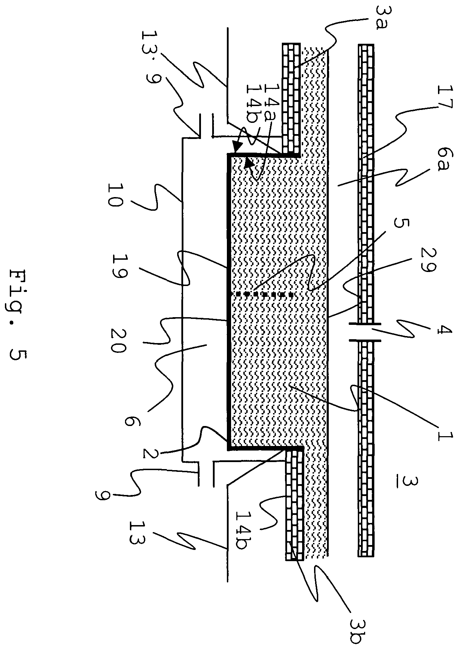

In der in Figur 5 dargestellten Variante der Hybrid- und Mischform der Läuterkammer 3 sind die Zu- und Abläufe 3a und 3b aus feuerfestem Material gefertigt und nach oben hin zum Atmosphärenraum offen. Die dargestellte Läuterkammer 3 weist einen Iridium umfassenden Abschnitt 20 auf. Dieser bildet in dem vorliegenden Fall den Boden 19 und zumindest einen Teil der Seitenwand. Der Iridium umfassende Abschnitt 20 oder das Aggregat 2 weist dabei eine Schmelzkontaktfläche 14a und eine schmelzabgewandte Seite 14b auf. In der in Figur 5 dargestellten Ausführungsform definiert das Aggregat 2 einen Raum zur Aufnahme einer Schmelze 1 und einen Raum für eine mit der Schmelze 1 in Kontakt stehenden Atmosphäre 6a. Das Aggregat wird über einen Flansch 13 konduktiv beheizt. Um einer Oxidation der Iridium umfassenden Abschnitte der Läuterkammer 3 vorzubeugen, ist der Iridium umfassende Abschnitt 20 der Läuterkammer 3 oder die freiliegende schmelzabgewandte Seite 14b des Iridium umfassenden Abschnitts 20 innerhalb einer Kapselung 10 angeordnet.. Die Kapselung 10 weist dabei eine Gaszufuhr 9, oder wie dargestellt eine Gasabfuhr und Gaszufuhr 9 auf und schützt insbesondere die Iridium umfassenden Abschnitte 20 der Läuterkammer 3 durch Anlegen einer definierten nicht-oxidierenden, vorzugsweise einer inerten Atmosphäre 6, vor Korrosion. Die Läuterkammer 3 oder die Hybridläuterkammer 3 ist so ausgeführt, dass zumindest der Zulauf 3a und der Ablauf 3b nach oben hin offen sind und nicht beheizte Feuerfestmaterialien umfassen. Die Schmelze 1 strömt mit einer freien Schmelzoberfläche über den Zulauf 3a in das Aggregat 2 hinein, durch das Aggregat 2 hindurch und über den Ablauf 3b aus dem Aggregat heraus. Materialien für die Decke 17 sind temperaturfeste, schmelzatmosphärenresistente und sich gutartig auflösende Feuerfestkeramiken, wie beispielsweise Quarzal, d.h. eine siliziumreiche Keramik, oder Mullit. Die Läuterkammer 3 verfügt weiterhin über zumindest ein Entlüftungsröhrchen 4, über das eine definierte Atmosphäre 6a im Bereich zwischen der Schmelzoberfläche 29 und der Decke 17 angelegt werden kann. Zur Verhinderung von Kurzschlussströmungen und zur Verbesserung der Stabilität der Konvektionszellen ist in der Läuterkammer 3 optional zumindest ein strömungsbeeinflussender Einbau 5 in der Schmelze 1 angeordnet, wodurch die Läuterung noch zusätzlich verbessert wird.

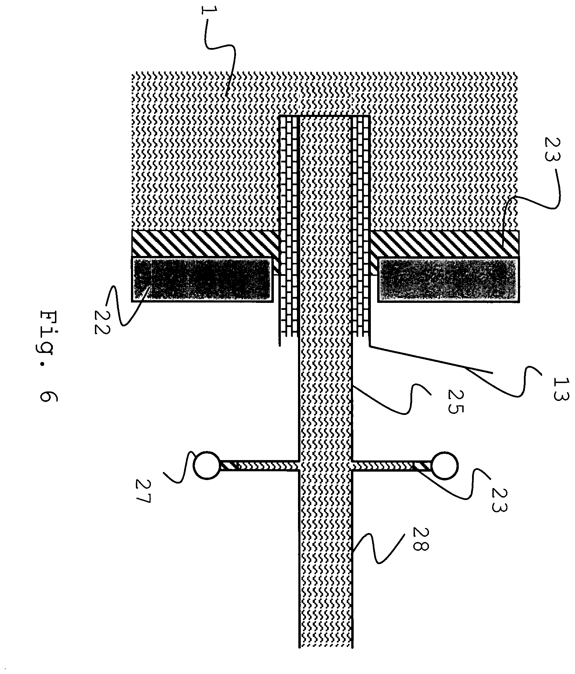

In Figur 6 ist schematisch der Anschluss des Zulaufs und/oder Ablaufs an eine kühlmittelgekühlte Stirnwand eines Läuterkammer-Hybridsystems Hierbei wird die Verbindung analog der Patentanmeldung DE 103 297 18 A1 ausgeführt. Zum anderen ist ein Übergang von Iridium oder Platin umfassenden Bauteilen auf vorgeschaltete und/oder nachgeschaltete Platin- oder Iridiumsysteme ebenfalls möglich. Dieser Übergang kann durch direktes Verschweißen von Iridium und Platin oder Platinlegierungen erfolgen. In diesem Falle ist es jedoch meist notwendig, die Verbindungen zusätzlich noch ineinander zu stecken, da Iridium-Platin Schweißungen keine ausreichend hohen mechanischen Festigkeiten aufweisen. Die Figur 6 zeigt beispielhaft zwei weitere Ausbildungsformen eines Übergangs.

Bei dem Übergang zwischen einer gekühlten Stirnwand des Läuteraggregates 18 auf ein über den Flansch 13 konduktiv beheiztes Entnahmesystem 25 aus Iridium oder Platin dient die lokale Kühlung der Wand des Läuteraggregates 18 dazu, dass die Schmelze 1 einfriert oder erstarrt. Die an dieser Stelle eingefrorene Glasschmelze 23 bildet in vorteilhafter Weise an dem Übergang zwischen der Wand des Läuteraggregates 18 und dem Entnahmesystem 25 eine Dichtung aus.

In einem zweiten Beispiel wird der Übergang zwischen dem Entnahmesystem aus Iridium oder Platin 25 und dem Rohr aus Platin oder Platinlegierungen 28 durch Aneinanderflanschen der beiden zu verbindenden Bauteile hergestellt. Die kühlmittelgekühlte Ringdichtung 27 bewirkt, dass die Glasschmelze 1 an der Anflanschstelle zwischen den beiden Rohren einfriert 23, wodurch eine glasige Dichtung an der Anflanschstelle entsteht. In einer besonderen Ausführungsform der Erfindung ist die Verwendung von keramischen und glasigen Dichtungen an der Anflanschstelle ist ebenfalls von Vorteil.

Eine analoge Vorgehensweise wird beim Anbringen von Iridium umfassenden Läuterkammern an Einschmelzaggregaten aus feuerfesten, keramischen/glasigen Materialien und Skullsystemen verwendet. Die Verbindung zwischen diesen Elementen kann über ein Platinzwischenstück, oder durch direktes Anflanschen mit Dichtscheiben oder Kühlungen hergestellt werden.

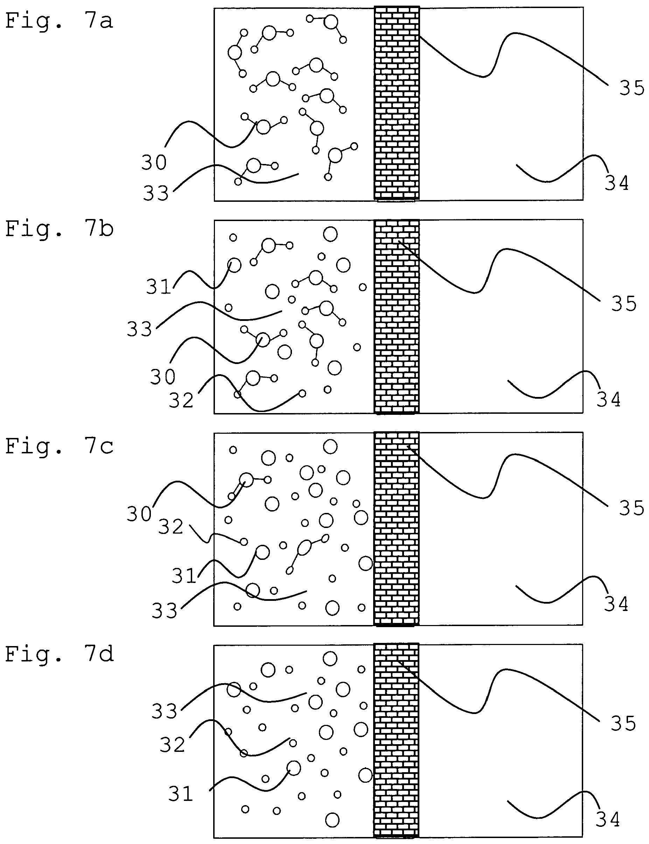

Die Figuren 7a bis 7d zeigen schematisch den Mechanismus der Sauerstoffdiffusionshemmung von Iridiumbauteilen. Die Figuren 7a bis 7d zeigen, dass mit zunehmender Temperatur von Figur 7a hin zu 7d die thermische Zersetzung des in der Glasschmelze enthaltenen Wassers 30 zunimmt, so liegt der Anteil an dissoziiertem Wasser bei 2000°C bei etwa 1 %. In Figur 7d, in der die Temperatur am höchsten ist, ist das Wasser 30 zu einem größeren Anteil in Wasserstoff 32 und Sauerstoff 31 dissoziiert. Bedingt durch die hohe Dichte der Wand aus Iridium umfassendem Material 35 wird eine Wasserstoffdiffusion vom Innenraum 33 in den Außenraum 34, durch eine Wand aus Iridium umfassendem Material 35 hindurch, verhindert.

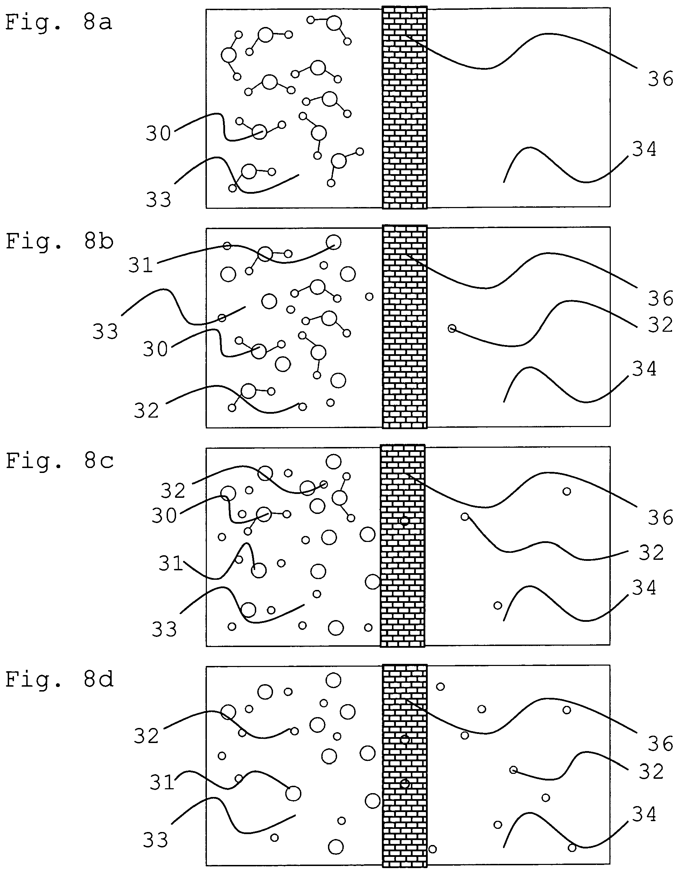

In den Figuren 8a bis 8d ist die Diffusion von Wasserstoff durch ein Metallbauteil, beispielsweise eine Platinwand dargestellt. Die Figuren 8a bis 8d zeigen, dass mit zunehmender Temperatur von Figur 8a hin zu 8d, die thermische Zersetzung des in der Glasschmelze enthaltenen Wassers 30 zunimmt. Wie aus Figur 8b ersichtlich wird, kommt es sofort nach Beginn der thermischen Spaltung des Wassers 30 in Sauerstoff 31 und Wasserstoff 32 zum Einsetzen einer Wasserstoffdiffusion durch die Platinwand 35 hindurch. Da Platin für Wasserstoff 32 permeabel und dieser nach dem Durchtritt sehr flüchtig ist, stellt sich kein Konzentrationsgleichgewicht auf beiden Seiten der Wand 35 ein. Der im Innenraum 33 verbleibende Überschuss an Sauerstoff 31 bewirkt bei einem Abkühlen der Schmelze die Entstehung von Blasen.

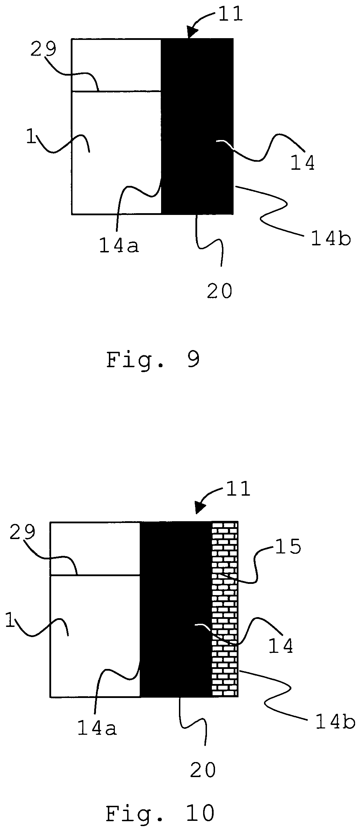

Fig. 9 zeigt eine beispielhafte Ausführungsform der vorliegenden Erfindung. Die dargestellte Wand 11 ist vorliegend als ein einschichtiges System ausgebildet. Dieses einschichtige System wird dabei durch den Iridium umfassenden Abschnitt 20 oder die Schmelzkontaktschicht 14 gebildet, welche mit ihrer Schmelzkontaktfläche 14a in direktem Kontakt mit der Schmelze 1 steht. Demzufolge übernimmt die Schmelzkontaktschicht 14 auch die tragende bzw. stützende Funktion der Wand 11. Mit anderen Worten, die Wand 11 besteht aus Iridium oder einer Iridiumlegierung mit den genannten Eigenschaften. Eine thermisch, chemisch und mechanisch stabile Wand 11 aus Iridium weist dabei eine Dicke von etwa 0,1 mm bis etwa 2 mm auf, bevorzugt von etwa 0,5 mm bis etwa 1,2 mm auf, während sich für eine Wand mit den genannten Bestandteilen einer Iridium-Legierung eine Dicke von etwa 800 µm bis etwa 3000 µm als vorteilhaft erwiesen hat.

Fig. 10 zeigt eine beispielhafte Ausführungsform der Wand 11 als zweischichtiges System oder als 2-Schicht-System. Dabei umfasst die Wand 11 oder ein Abschnitt der Wand 11 die Schmelzkontaktschicht 14 und eine Trägerschicht 15, welcher auf der schmelzabgewandten Seite der Schmelzkontaktschicht 14 angeordnet ist. Oder aber die Schmelzkontaktschicht 14 ist auf der Trägerschicht 15 angeordnet. Der Trägerschicht 15 kommt sowohl eine Stütz- oder Trägerfunktion als auch eine Schutzfunktion zu. Dies umfasst zum einen den Vorteil, dass die Iridium umfassende Schmelzkontaktschicht 14, welche oberhalb einer Temperatur von etwa 1000°C nicht oxidationsbeständig gegenüber dem Sauerstoff der umgebenden Luft ist, durch die Trägerschicht 15 vor Oxidation geschützt ist.

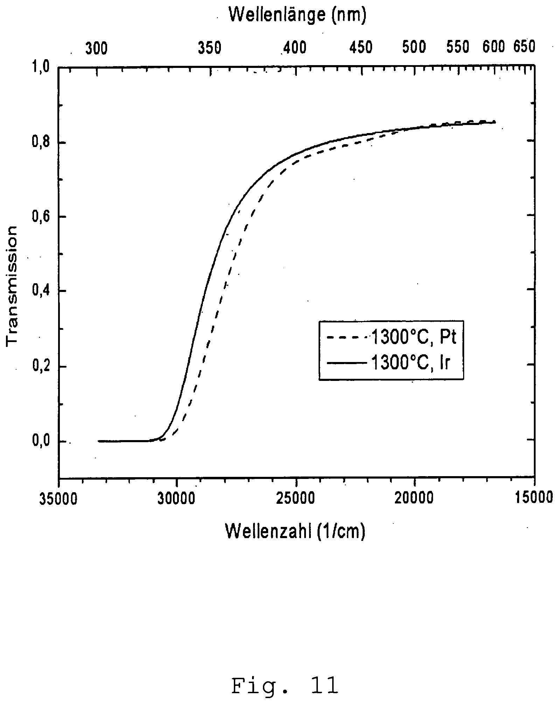

Figur 11 zeigt das Ergebnis der Untersuchung des Reintransmissionsgrads τᵢ eines Lanthan-Borat-Glases als Funktion der Wellenlänge im unteren sichtbaren Bereich des optischen Spektrums. Das Glas wurde jeweils in einem Aggregat aus Platin und einem Aggregat aus Iridium bei etwa 1300°C geläutert. Es ist deutlich zu erkennen, dass das Glas, welches in dem Iridium-Aggregat geläutert wurde, in dem dargestellten Bereich, insbesondere von etwa 320 nm bis etwa 500 nm, eine erhöhte und somit verbesserte Transmission gegenüber dem Glas, welche in dem Platin-Aggregat geläutert wurde, aufweist. In einer anderen Betrachtung ergibt sich somit eine Verschiebung der Kurven. Bei einem Reintransmissionsgrad τᵢ in einem Bereich von etwa 20 % oder 0,2 bis etwa 80 % oder 0,8 weist die Verschiebung einen Wert von etwa 8 nm bis etwa 22 nm, zu kleinen Wellenlängen hin auf. Eine Variation des Glases kann eine absolute Verschiebung der beiden Kurven bedingen. Der relative Abstand der beiden Kurven wird jedoch im Wesentlichen so wie in Fig. 11 dargestellt erwartet.

Die Bezugszeichen stehen für folgende Bauteile:
- 1: Schmelze oder Glasschmelze
- 2: Aggregat
- 3: Läuterkammer
- 3a: Zulauf
- 3b: Ablauf
- 4: Entlüftungsröhrchen
- 5: Strömungsbeeinflussender Einbau
- 6: Definierte Atmosphäre
- 6a: Atmosphäre mit Schmelzkontakt
- 7: Bauteil, aus Platin- und/oder Platinlegierungen
- 8: Dichte Verbindungsstelle Ir-Pt an der Kapselung
- 9: Gaszufuhr oder -abfuhr
- 10: Kapselung
- 11: Wand
- 12: optionale Flansche zur direkten elektrischen Beheizung
- 13: Flansche
- 14: Schmelzkontaktschicht
- 14a: Schmelzkontaktfläche
- 14b: Schmelzabgewandte Seite
- 15: Trägerschicht
- 16: Induktionsspule
- 17: Decke
- 18: Seitenwand
- 19: Boden
- 20: Iridium umfassender Abschnitt
- 21: gekühlte Ringdichtung
- 22: kühlmittel gekühlte Wand
- 23: erstarrte Glasschmelze
- 24: Anschlußplatte
- 25: Entnahmerohr
- 27: kühlmittelgekühlte Ringdichtung am Verbindungsflansch
- 28: Rohr aus Iridium
- 29: Schmelzoberfläche
- 30: Wassermolekül
- 31: Sauerstoffatom
- 32: Wasserstoffatom
- 33: Innenraum
- 34: Außenraum
- 35: Wand aus Iridium umfassendem Material
- 36: Platinwand

## Patentansprüche

1. Verfahren zum kontinuierlichen Läutern, einer vorzugsweise niedrigviskosen Glasschmelze (1)
in einem Aggregat (2),
welches einen Raum zur Aufnahme der Schmelze (1) und einer mit der Schmelze (1) in Kontakt stehenden Atmosphäre (6a) definiert,
mit zumindest einem Zulauf (3a),
wobei die Glasschmelze von der Seite über den Zulauf (3a) in das Aggregat (2) eintritt und
zumindest einem Ablauf (3b),
wobei die Glasschmelze von der Seite über den Ablauf (3b) aus dem Aggregat (2) austritt,
wobei zumindest ein Abschnitt (20) des Aggregats (2) und gegebenenfalls des Zulaufs (3a) und/oder des Ablaufs (3b),
welcher Abschnitt eine Schmelzkontaktfläche (14a) aufweist, Iridium umfasst und zumindest der Iridium umfassende Abschnitt (20) des Aggregats (2) und gegebenenfalls des Zulaufs (3a) und/oder des Ablaufs (3b) konduktiv und/oder induktiv beheizt wird,
wobei der Iridium umfassende Abschnitt (20) mit einem Anteil an Iridium von etwa 50 Gew.-% bis etwa 100 Gew.-%, bevorzugt von etwa 90 Gew.- % bis etwa 100 Gew.-%, besonders bevorzugt von grösser als etwa 99 Gew.-% bis 100 Gew.-%, bereitgestellt wird; wobei, zumindest der Bereich des Iridium umfassenden
Abschnitts (20) des Aggregats (2), welcher keine Schmelzkontaktfläche (14a) aufweist, mit zumindest einer Verkapselung (10) bereitgestellt wird.

2. Verfahren nach vorstehendem Anspruch **dadurch gekennzeichnet, dass**
die Schmelzkontaktfläche des Aggregates (2), insbesondere des Bodens (19) und/oder des Deckels (17) und/oder der Seitenwand (18), und/oder des Zulaufs (3a) und/oder des Ablaufs (3b) mit einer Skullkruste (23) bedeckt ist.

3. Vorrichtung, insbesondere zum Ausführen eines Verfahrens gemäß Anspruch 1, zum kontinuierlichem Läutern, einer vorzugsweise niedrigviskosen Glasschmelze (1) in einem Aggregat (2), welches einen Raum zur Aufnahme der Schmelze (1) und eine mit der Schmelze in Kontakt stehenden Atmosphäre (6a) definiert,
mit zumindest einem Zulauf (3a), wobei die Glasschmelze (1) von der Seite über den Zulauf (3a) in das Aggregat (2) eintritt, und/oder zumindest einem Ablauf(3b),
wobei die Glasschmelze von der Seite über den Ablauf (3b) aus dem Aggregat (2) austritt,
wobei zumindest ein Abschnitt (20), welcher zumindest abschnittsweise eine Schmelzkontaktfläche (14a) aufweist, des Aggregates (2) und/oder des Zulaufs (3a) und/oder des Ablaufs (3b) Iridium umfasst, wobei der Iridium umfassende Abschnitt (20) einen Anteil an Iridium von etwa 50 Gew.-% bis etwa 100 Gew.-%, bevorzugt von etwa 90 Gew.-% bis etwa 100 Gew.-%, besonders bevorzugt von größer als etwa 99 Gew.-% bis etwa 100 Gew.-% aufweist,
wobei zumindest ein Abschnitt (20) des Aggregats (2) und gegebenenfalls des Zulaufs (3a) und/oder des Ablaufs (3b),
welcher Abschnitt eine Schmelzkontaktfläche (14a) aufweist, Iridium umfasst und zumindest der Iridium umfassende Abschnitt (20) des Aggregats (2) und gegebenenfalls des Zulaufs (3a) und/oder des Ablaufs (3b) konduktiv und/oder induktiv beheizt ist,
wobei, zumindest der Bereich des Iridium umfassenden Abschnitts (20) des Aggregats (2) , welcher keine Schmelzkontaktfläche (14a) aufweist, mit zumindest einer Verkapselung (10) bereitgestellt ist.

4. Vorrichtung nach vorstehendem Anspruch **dadurch gekennzeichnet,**
**dass** das Aggregat (2), insbesondere der Iridium umfassende Abschnitt (20), zumindest einen Abschnitt mit einer Temperaturbeständigkeit von größer als etwa 1700°C, bevorzugt von größer als etwa 2000°C, besonders bevorzugt von größer als etwa 2200°C aufweist.

5. Vorrichtung nach Anspruch 3 **dadurch gekennzeichnet,**
**dass** die Verkapselung (10) zumindest einen Mantel aus Metall und/oder Kieselglas und/oder aus einem nicht leitfähigen, gasfesten Hochtemperaturwerkstoff umfasst und insbesondere auf der schmelzabgewandten Seite (14b) des Iridium umfassenden Abschnitts (20) angeordnet ist.

6. Vorrichtung nach vorstehendem Anspruch **dadurch gekennzeichnet,**
**dass** die Verkapselung (10) eine definierte Atmosphäre (6) umfasst.

7. Vorrichtung nach vorstehendem Anspruch **dadurch gekennzeichnet,**
**dass** die definierte Atmosphäre (6, 6a) im Wesentlichen der Atmosphäre (6a) entspricht, welche in dem durch das Aggregat (2) definierten Raum angelegt ist und/oder in einem Raum (6a), welcher zumindest abschnittsweise von der schmelzabgewandten Seite (14b) des Iridium umfassenden Abschnitts begrenzt ist, angelegt ist.

8. Vorrichtung nach einem der vorstehenden Ansprüche von 3 bis 7 **dadurch gekennzeichnet, dass** der Boden (19) des Aggregates (2) im Wesentlichen nicht planar, insbesondere eine Erhebung aufweisend, ausgebildet ist.

9. Vorrichtung nach vorstehendem Anspruch **dadurch gekennzeichnet, dass** die Erhebung einen Querschnitt aufweist, der im Wesentlichen der Gestalt eines Dreiecks und/oder eines Halbkreises entspricht.

10. Vorrichtung nach einem der vorstehenden Ansprüche von 3 bis 9 **dadurch gekennzeichnet, dass** ein mit der Schmelze (1) nicht in Kontakt stehender Abschnitt des Aggregats (2), insbesondere der Deckel (7), als Material zumindest ein feuerfestes Material, vorzugsweise eine Keramik oder ein Metall, aufweist.

11. Vorrichtung nach einem der vorstehenden Ansprüche von 3 bis 10 **dadurch gekennzeichnet, dass** das Aggregat (2) und/oder der Zulauf (3a) und/oder der Ablauf (3b) zumindest abschnittsweise erwärmbar ausgebildet ist beziehungsweise sind.

12. Vorrichtung nach einem der vorstehenden Ansprüche von 3 bis 11 **dadurch gekennzeichnet, dass** das Aggregat (2), insbesondere der Boden (19) und/oder der Deckel (17) und/oder die Seitenwand (18), und/oder der Zulauf (3a) und/oder der Ablauf (3b) des Aggregates (2) zumindest abschnittsweise kühlbar ausgebildet sind.

## Claims

1. A method for continuous refining of a preferably low-viscosity glass melt (1) in a unit (2)
which defines a space for receiving the melt (1) and an atmosphere (6a) in contact with the melt (1);
comprising at least one inlet (3a), wherein the glass melt enters the unit (2) laterally, via the inlet (3a); and
at least one outlet (3b), wherein the glass melt exits the unit (2) laterally, via the outlet (3b);
wherein at least a portion (20) of the unit (2) and optionally of the inlet (3a) and/or of the outlet (3b), which portion exhibits a melt contact surface (14a), comprises iridium, and wherein at least the iridium comprising portion (20) of the unit (2) and optionally of the inlet (3a) and/or of the outlet (3b) is heated conductively and/or inductively;
wherein the iridium comprising portion (20) is provided with a content of iridium from about 50 wt% to about 100 wt%, preferably from about 90 wt% to about 100 wt%, most preferably of more than about 99 wt% to 100 wt%;
wherein at least the area of the iridium comprising portion (20) of the unit (2) not exhibiting a melt contact surface (14a) is provided with at least one encapsulation (10).

2. The method according to the preceding claim, **characterized in that**
the melt contact surface of the unit (2), in particular of the bottom (19) and/or of the cover (17) and/or of the side wall (18) and/or of the inlet (3a) and/or of the outlet (3b) is covered by a skull crust (23).

3. An apparatus, in particular for carrying out a method according to claim 1 for continuous refining of a preferably low-viscosity glass melt (1) in a unit (2) which defines a space for receiving the melt (1) and an atmosphere (6a) in contact with the melt;
comprising at least one inlet (3a), wherein the glass melt enters the unit (2) laterally, via the inlet (3a); and/or
at least one outlet (3b), wherein the glass melt exits the unit (2) laterally, via the outlet (3b);
wherein at least a portion (20) of the unit (2) and/or of the inlet (3a) and/or of the outlet (3b) exhibiting a melt contact surface (14a) at least in sections thereof comprises iridium, wherein the iridium comprising portion (20) has a content of iridium from about 50 wt% to about 100 wt%, preferably from about 90 wt% to about 100 wt%, most preferably of more than about 99 wt% to 100 wt%;
wherein at least a portion of the unit (2) and optionally of the inlet (3a) and/or of the outlet (3b), which exhibits a melt contact surface (14a) comprises iridium, and wherein at least the iridium comprising portion (20) of the unit (2) and optionally of the inlet (3a) and/or of the outlet (3b) is heated conductively and/or inductively;
wherein at least the area of the iridium comprising portion (20) of the unit (2) not exhibiting a melt contact surface (14a) is provided with at least one encapsulation (10).

4. The apparatus according to the preceding claim, **characterized in that**
the unit (2), in particular the iridium comprising portion (20), has at least one section with a temperature resistance greater than about 1700 °C, preferably greater than about 2000 °C, most preferably greater than about 2200 °C.

5. The apparatus according to claim 3, **characterized in that**
the encapsulation (10) comprises at least one sheath of metal and/or of silica glass and/or of a non-conductive, gas-resistant high-temperature material and is in particular arranged on the side (14b) of the iridium comprising portion (20) facing away from the melt.

6. The apparatus according to the preceding claim, **characterized in that**
the encapsulation (10) comprises a defined atmosphere (6).

7. The apparatus according to the preceding claim, **characterized in that**
the defined atmosphere (6, 6a) substantially corresponds to the atmosphere (6a) which is applied in the space defined by the unit (2) and/or in a space (6a) which is bounded by the side (14b) of the iridium comprising portion facing away from the melt, at least in sections thereof.

8. The apparatus according to any one of the preceding claims 3 to 7, **characterized in that**
the bottom (19) of the unit (2) has a substantially non-planar shape, in particular having an elevation.

9. The apparatus according to the preceding claim, **characterized in that**
the elevation has a cross section substantially corresponding to a triangular and/or semicircular shape.

10. The apparatus according to any one of the preceding claims 3 to 9, **characterized in that**
a portion of the unit (2) not contacting the melt (1), in particular the cover (7), comprises at least one refractory material, preferably a ceramic or a metal as material.

11. The apparatus according to any one of the preceding claims 3 to 10, **characterized in that**
the unit (2) and/or the inlet (3a) and/or the outlet (3b) is or are adapted for being heated, at least in sections thereof.

12. The apparatus according to any one of the preceding claims 3 to 11, **characterized in that**
the unit (2), in particular the bottom (19) and/or the cover (17) and/or the side wall (18) and/or the inlet (3a) and/or the outlet (3b) of the unit (2) are adapted for being cooled, at least in sections thereof.

## Revendications

1. Procédé destiné à l'affinage en continu de verre en fusion (1), de préférence à faible viscosité,
dans une unité (2),
qui définit un espace destiné à recevoir la masse en fusion (1) et une atmosphère (6a) qui est en contact avec la masse en fusion (1),
comprenant au moins une arrivée (3a),
où le verre en fusion entre depuis le côté dans l'unité (2), en passant par l'arrivée (3a), et
au moins une évacuation (3b),
où le verre en fusion sort sur le côté de l'unité (2), en passant par l'évacuation (3b),
où au moins une partie (20) de l'unité (2) et, le cas échéant, de l'arrivée (3a) et/ou de l'évacuation (3b),
partie présentant une surface de contact de masse en fusion (14a), comporte de l'iridium, et au moins la partie (20) de l'unité (2) et, le cas échéant, de l'arrivée (3a) et/ou de l'évacuation (3b) qui comporte de l'iridium est chauffée par conduction et/ou par induction,
où la partie (20) comportant de l'iridium est réalisée avec une teneur en iridium allant d'environ 50 % en poids à environ 100 % en poids, de préférence d'environ 90 % en poids à environ 100 % en poids, et de manière particulièrement avantageuse de plus d'environ 99 % en poids à 100 % en poids ;
où au moins la zone de la partie (20) de l'unité (2) comportant de l'iridium, qui ne présente pas de surface de contact de masse en fusion (14a), est dotée d'au moins un blindage (10).

2. Procédé selon la revendication précédente, **caractérisé en ce que** la surface de contact de masse en fusion de l'unité (2), notamment du fond (19) et/ou du couvercle (17) et/ou de la paroi latérale (18) et/ou de l'arrivée (3a) et/ou de l'évacuation (3b), est recouverte d'une croûte refroidie (23).

3. Dispositif, destiné notamment à la mise en oeuvre d'un procédé selon la revendication 1, aux fins d'affinage en continu de verre en fusion (1), de préférence à faible viscosité, dans une unité (2) qui définit un espace, destiné à recevoir la masse en fusion (1) et une atmosphère (6a) qui est en contact avec la masse en fusion,
comprenant au moins une arrivée (3a), où le verre en fusion entre depuis le côté dans l'unité (2), en passant par l'arrivée (3a), et/ou au moins une évacuation (3b),
où le verre en fusion sort sur le côté de l'unité (2), en passant par l'évacuation (3b),
où au moins une partie (20) de l'unité (2) et/ou de l'arrivée (3a) et/ou de l'évacuation (3b), qui présente au moins localement une surface de contact de masse en fusion (14a), comporte de l'iridium, sachant que la partie (20) comportant de l'iridium présente une teneur en iridium allant d'environ 50 % en poids à environ 100 % en poids, de préférence d'environ 90 % en poids à environ 100 % en poids, et de manière particulièrement avantageuse de plus d'environ 99 % en poids à environ 100 % en poids,
où au moins une partie (20) de l'unité (2) et, le cas échéant, de l'arrivée (3a) et/ou de l'évacuation (3b),
partie présentant une surface de contact de masse en fusion (14a), comporte de l'iridium, et au moins la partie (20) de l'unité (2) et, le cas échéant, de l'arrivée (3a) et/ou de l'évacuation (3b), qui comporte de l'iridium est chauffée par conduction et/ou par induction,
où au moins la zone de la partie (20) de l'unité (2) comportant de l'iridium, qui ne présente pas de surface de contact de masse en fusion (14a), est dotée d'au moins un blindage (10).

4. Dispositif selon la revendication précédente, **caractérisé en ce que** l'unité (2), en particulier la partie (20) comportant de l'iridium, présente au moins une zone avec une résistance aux températures supérieures à environ 1 700 °C, de préférence supérieures à environ 2 000 °C, et de manière particulièrement avantageuse supérieures à environ 2 200 °C.

5. Dispositif selon la revendication 3, **caractérisé en ce que** le blindage (10) comprend au moins une enveloppe en métal et/ou en verre de silice et/ou en matériau haute température non conducteur, résistant aux gaz, et est notamment disposé sur le côté (14b) de la partie (20) comportant de l'iridium, qui est opposé à la masse en fusion.

6. Dispositif selon la revendication précédente, **caractérisé en ce que** le blindage (10) présente une atmosphère (6) définie.

7. Dispositif selon la revendication précédente, **caractérisé en ce que** l'atmosphère définie (6, 6a) correspond sensiblement à l'atmosphère (6a) qui est créée dans l'espace délimité par l'unité (2) et/ou dans un espace (6a) qui est délimité au moins en partie par le côté (14b) de la partie comportant de l'iridium, qui est opposé à la masse en fusion.

8. Dispositif selon l'une des revendications précédentes 3 à 7, **caractérisé en ce que** le fond (19) de l'unité (2) est réalisé sensiblement sous une forme non plane et notamment avec une saillie.

9. Dispositif selon la revendication précédente, **caractérisé en ce que** la saillie présente une section transversale qui correspond sensiblement à la forme d'un triangle et/ou d'un demi-cercle.

10. Dispositif selon l'une des revendications précédentes 3 à 9, **caractérisé en ce qu'**une partie de l'unité (2) qui n'est pas en contact avec la masse en fusion (1), notamment le couvercle (7), présente en tant que matériau au moins un matériau réfractaire, de préférence une céramique ou un métal.

11. Dispositif selon l'une des revendications précédentes 3 à 10, **caractérisé en ce que** l'unité (2) et/ou l'arrivée (3a) et/ou l'évacuation (3b) sont réalisées de manière à pouvoir être chauffées au moins localement.

12. Dispositif selon l'une des revendications précédentes 3 à 11, **caractérisé en ce que** l'unité (2), notamment le fond (19) et/ou le couvercle (17) et/ou la paroi latérale (18) et/ou l'arrivée (3a) et/ou l'évacuation (3b) de l'unité (2) sont réalisés de manière à pouvoir être refroidis au moins localement.
